(19) Europäisches Patentamt
European Patent Office
Office européen des brevets

(11) **EP 4 109 376 A1**

(12) **EUROPEAN PATENT APPLICATION**

(43) Date of publication:
**28.12.2022 Bulletin 2022/52**

(21) Application number: **22190741.3**

(22) Date of filing: **28.03.2017**

(51) International Patent Classification (IPC):
***G06Q 30/02*** (2012.01)   ***H04M 1/725*** (2021.01)

(52) Cooperative Patent Classification (CPC):
**G06F 9/451; G06F 8/38; G06Q 30/0241;
G06Q 30/0601; G06Q 30/0631; G06Q 30/0641**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2016 CN 201610201261**

(62) Document number(s) of the earlier application(s) in
accordance with Art. 76 EPC:
**17775801.8 / 3 403 389**

(71) Applicant: **Samsung Electronics Co., Ltd.
Gyeonggi-do, 16677 (KR)**

(72) Inventors:
• **Tang, Tang
Suwon-si, Gyeonggi-do 16677 (KR)**

• **Wu, Rui
Suwon-si, Gyeonggi-do 16677 (KR)**
• **Zhang, Li
Suwon-si, Gyeonggi-do 16677 (KR)**
• **Luo, Zhenbo
Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

Remarks:
This application was filed on 17-08-2022 as a
divisional application to the application mentioned
under INID code 62.

(54) **CONTENT DETERMINING METHOD AND APPARATUS FOR INTELLIGENT DEVICE**

(57)    The present disclosure relates to a content determining method by an intelligent device, the method comprising: determining a source data area, wherein the source data area is located in a first application; determining a destination data area, wherein the destination data area is located in a second application; filtering content in the source data area based on user's personal information; and determining content in the destination data area for the second application according to the filtered content in the source data area, wherein determining the source data area comprises: determining a selected content based on a selection made by a user on an interface of the intelligent device, generating a pop-up clipboard menu based on a touch operation performed by the user, wherein the pop-up clipboard menu comprises a source data area configuration icon to determine the source data area.

FIG. 6

## Description

### [Technical Field]

The present disclosure relates generally to intelligent device methods, and more particularly, to a content determining method and apparatus for an intelligent device.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

In current mobile intelligent devices such as a cellphone and a tablet computer, there may be a serious data barrier between different applications. Restricted by a closed application environment and a small screen size, a user generally faces many inconveniences such as complicated operations and limited functions if the user must finish a task using multiple applications simultaneously on an intelligent device. Furthermore, for a fixed computing device such as a personal computer, although the operating space is relatively sufficient, most applications cannot share data with other applications conveniently.

In view of the above, in existing intelligent devices, cross-application data transmission is provided with respect to data content itself. If it is required to copy data among different applications frequently due to a requirement of multi-task or complicated task processing, operations such as frequent application switching and copy-paste must be performed, which is inflexible.

### [Disclosure of Invention]

### [Technical Problem]

An aspect of the present disclosure provides a content determining method and apparatus for an intelligent device.

### [Solution to Problem]

The present invention is directed to subject matter as defined in the claims.

In accordance with an aspect of the present disclosure, a content determining method for an intelligent device is provided. The method includes: determining, in a source data area determining device, a source data area and, in a destination data area determining device, a destination data area having a dynamic association relationship with the source data area; and determining, in a content determining device, content in the destination data area according to content in the source data area.

In accordance with another aspect of the present disclosure, a content determining method for an intelligent device is provided. The method includes: determining, in a source data area determining device, a source data area from multimedia information collected in real time by an information collecting apparatus, determining, in a destination data area determining device, a destination data area associated with the source data area; and determining, in a content determining device, content in the destination data area based on content in the source data area.

In accordance with another aspect of the present disclosure, a content determining method for an intelligent device is provided. The method includes: determining, in a source data area determining device, a source data area in the intelligent device, wherein the source data area has a dynamic association relationship with a destination data area in another intelligent device; and transmitting content in the source data area to the another intelligent device, wherein the another intelligent device determines, in a content determining device, content of the destination data area based on the content of the source data area.

In accordance with another aspect of the present disclosure, a content determining method for an intelligent device is provided. The method includes: determining, in a destination data area determining device, a destination data area in the intelligent device, wherein the destination data area has a dynamic association relationship with a source data area in another intelligent device; receiving content of the source data area transmitted by the another intelligent device; and determining, in a content determining device, content of the destination data area based on the content of the source data area.

In accordance with another aspect of the present disclosure, an information sharing method for an intelligent device is provided. The method includes: determining, in a sharing information determining device, sharing information to be shared with another intelligent device, wherein the sharing information includes an association relationship between a source data area and a destination data area; and transmitting the sharing information to the another intelligent device.

In accordance with another aspect of the present disclosure, an information sharing method for an intelligent device is provided. The method includes: receiving sharing information transmitted by another intelligent device, wherein the sharing information includes an association relationship between a source data area and a destination data area; establishing the association relationship between the source data area and the destination data area according to the received sharing information; and determining, in a content determining device, content of the destination data area based on the content of the source data area.

In accordance with another aspect of the present disclosure, a content determining apparatus for an intelligent device is provided. The apparatus includes: a data area determining device, adapted to determine a source data area and a destination data area having a dynamic association relationship with the source data area; and a content determining device, adapted to determine content of the destination data area based on content of the source data area.

In accordance with another aspect of the present disclosure, a non-transitory computer-readable recording medium including a program for executing a content determining method for an intelligent device is provided. The method includes: determining a source data area and, in a destination data area determining device, a destination data area having a dynamic association relationship with the source data area; and determining content in the destination data area according to content in the source data area.

## [Advantageous Effects of Invention]

Embodiments of the present disclosure also provide a cross-device data area dynamic association method and a cross-device dynamic association information sharing method. The dynamic associated data areas may come from different devices. The dynamic association information in one device may be shared with another device to establish a dynamic association relationship between the same data areas in the other device.

## [Brief Description of Drawings]

The above and other aspects, features, and advantages of the present disclosure will be more apparent from the following detailed description taken in conjunction with the accompanying drawings, in which:

FIG. 1 is flowchart of a content determining method for an intelligent device according to an embodiment of the present disclosure;

FIG. 2 is a flowchart of a scenario-based content determining method for an intelligent device according to an embodiment of the present disclosure;

FIG. 3A is a flowchart of a content determining method for an intelligent device according to an embodiment of the present disclosure;

FIG. 3B is a flowchart of a content determining method for an intelligent device according to an embodiment of the present disclosure;

FIG. 4A is a flowchart of an information sharing method for an intelligent device according to an embodiment of the present disclosure;

FIG. 4B is a flowchart of an information sharing method for an intelligent device according to an embodiment of the present disclosure;

FIG. 5A is an illustration of a determination of a source data area on a full-screen interface according to an embodiment of the present disclosure;

FIG. 5B is an illustration of a determination of candidate destination applications according to an embodiment of the present disclosure;

FIG. 5C is an illustration of an interface of a destination application according to an embodiment of the present disclosure;

FIG. 5D is an illustration of a destination data area on an interface according to an embodiment of the present disclosure;

FIG. 6 is an illustration of a selection list for transmission content according to an embodiment of the present disclosure;

FIGs. 7A and 7B are illustrations of prompting to adjust transmission content if device status changes according to an embodiment of the present disclosure;

FIG. 8 is an illustration of selecting a transmission content confirming manner according to an embodiment of the present disclosure;

FIG. 9 is an illustration of confirming and browsing transmission content at a receiving end according to an embodiment of the present disclosure;

FIG. 10 is an illustration of a display manner in a split-screen mode according to an embodiment of the present disclosure;

FIG. 11A is an illustration of configuring a camera application as a data source according to an embodiment of the present disclosure;

FIG. 11B is an illustration of identifying a source data area in a data source according to an embodiment of the present disclosure;

FIG. 11C is an illustration of a change of content in a destination data area with the content in a source data area according to an embodiment of the present disclosure;

FIG. 11D is an illustration of a change of content in a destination data area with the content in a source data area according to an embodiment of the present disclosure;

FIG. 11E is an illustration of a change of content in a destination data area with content in a source data area according to an embodiment of the present disclosure;

closure;

FIG. 12 is an illustration of a change of displaying multimedia information with a destination data area according to an embodiment of the present disclosure;

FIG. 13 is a flowchart of a method of recognizing text from multimedia information according to an embodiment of the present disclosure;

FIG. 14 is an illustration of a connection manner of serially-connected data pipelines according to an embodiment of the present disclosure;

FIGs. 15A and 15B are illustrations of an establishment and usage manner of serially-connected data pipelines according to an embodiment of the present disclosure;

FIG. 16 is an illustration of a connection manner for one-to-multiple data pipelines according to an embodiment of the present disclosure;

FIGs. 17A and 17B are illustrations of an establishment of one-to-multiple data pipelines and various message transmission manners according to an embodiment of the present disclosure;

FIG. 18 is an illustration of an establishment of a data pipeline between application scenarios on two sides of a data pipeline according to an embodiment of the present disclosure;

FIG. 19A is an illustration of an establishment of multiple data pipelines between two shopping applications according to an embodiment of the present disclosure;

FIG. 19B is an illustration of an establishment of multiple data pipelines between two shopping applications according to an embodiment of the present disclosure;

FIG. 19C is an illustration of an establishment of multiple data pipelines between two shopping applications according to an embodiment of the present disclosure;

FIG. 20A is an illustration of an establishment of multiple data pipelines between a realistic scenario and a shopping application according to an embodiment of the present disclosure;

FIG. 20B is an illustration of an establishment of multiple data pipelines between a realistic scenario and a shopping application according to an embodiment of the present disclosure;

FIG. 20C is an illustration of an establishment of multiple data pipelines between a realistic scenario and a shopping application according to an embodiment of the present disclosure;

FIG. 20D is an illustration of an establishment of multiple data pipelines between a realistic scenario and a shopping application according to an embodiment of the present disclosure;

FIG. 21 is an illustration of cross-device transmission of a dynamic association relationship according to an embodiment of the present disclosure;

FIG. 22 is an illustration of a configuration interface for a sharing function according to an embodiment of the present disclosure;

FIG. 23 is an illustration of an application selection interface for a cross-device data pipeline according to an embodiment of the present disclosure;

FIG. 24 is an illustration of dynamic data transmission from a cell phone to a tablet computer according to an embodiment of the present disclosure;

FIG. 25 is an illustration of sharing a data pipeline according to an embodiment of the present disclosure;

FIG. 26 is an illustration of an interface of a data pipeline list according to of the present disclosure;

FIG. 27A is an illustration of downloading a missing application during transition of a data pipeline according to an embodiment of the present disclosure;

FIG. 27B is an illustration of downloading a missing application during transition of a data pipeline according to an embodiment of the present disclosure;

FIG. 27C is an illustration of re-showing a data pipeline in a cellphone according to an embodiment of the present disclosure;

FIG. 28 is a schematic diagram of a content determining apparatus for an intelligent device according to an embodiment of the present disclosure;

FIG. 29 is a schematic diagram of a content determining apparatus for an intelligent device according to an embodiment of the present disclosure;

FIG. 30 is a schematic diagram of a content determining apparatus for an intelligent device according to an embodiment of the present disclosure;

FIG. 31 is a schematic diagram of a content determining apparatus for an intelligent device according to an embodiment of the present disclosure;

FIG. 32 is a schematic diagram of an information sharing apparatus for an intelligent device according to an embodiment of the present disclosure; and

FIG. 33 is a schematic diagram of an information sharing apparatus for an intelligent device according to an embodiment of the present disclosure.

**[Mode for the Invention]**

The present disclosure is described in further detail hereinafter with reference to the accompanying drawings to make the objective, technical solution and merits therein clearer.

In an embodiment of the present disclosure, carriers (i.e. data areas) of data content rather than the data content themselves are associated, which realizes a dynamic association relationship between content in a destination data area and content in a source data area. Therefore, the content in the destination data area may be automatically updated with a change of the content in the source data area, which avoids frequent application switching and copy-paste operations.

Embodiments of the present disclosure provide a technical solution for realizing content update in the destination data area based on the associated data area. Among different applications or within the same application, according to a dynamic association relationship between a source data area and a destination data area, content in the destination data area associated with the source data area may be automatically updated based on content in the source data area.

In the embodiments of the present disclosure, a data area is a carrier for data content in a user interface, or may be a container containing data operable by or visible to a user and having a display manner (e.g., a fixed display manner). For example, the data area may include a text box, a search box, a button, a menu, etc. In addition, a realistic object which is presentable in a user interface, or detectable or recognizable by a system may also be data. Accordingly, a user interface which presents an object may also present the object within the scope of a data area according to an embodiment of the present disclosure.

A dynamic association relationship may be a data pipeline between a source data area and a destination data area. The pipeline may be a process communication scheme. Based on a file system, transmission of messages may be implemented between two processes based on the pipeline.

Those with ordinary skill in the art would know that a data pipeline is merely one way of implementing a dynamic association relationship. However, the present disclosure is not limited thereto.

An establishment of a dynamic association relationship between a source data area and a destination data area may also be an establishment of a data pipeline between the source data area and the destination data area.

A determination of content in a destination data area according to content in a source data area may also be made by a process/processing module or device for processing the source data area transmitting the content which forms a basis for an update of the destination data area to a process/processing module for processing the destination data area via an established data pipeline. The content transmitted via the data pipeline (e.g. the content which forms a basis for the update of the destination data area) may be referred to as transmission content.

In an embodiment of the present disclosure, a data area having data transmission capability may act as a source data area, and a data area having data receiving capability may act as a destination data area. A data area may act as both a source data area and a destination data area at the same time. For example, a data area A may be a source data area for data area B, and the data area B may be a destination date area for data area A. At the same time, the data area B may be a source data area for a data area C. A data area may also act as merely a source data area or a destination data area.

In an embodiment of the present disclosure, before establishing a dynamic association relationship between data areas, there may be no association relationship between contents. In other words, a change of content in one data area will not lead to an update of data in another data area. In order to realize a content association relationship between data areas, a user may establish a customized association relationship between data areas according to his/her requirement. After a dynamic association relationship between data areas is established, if content of one data area changes, content in another data area will be updated accordingly, which avoids frequent application switching and copy-paste operations of the user.

In an embodiment of the present disclosure, if content of a source data area and content of a destination data area are respective content A and content B before a dynamic association relationship is established, after the dynamic association relationship is established, even if the content of the source data area is not changed, it is possible to update the content in the destination data area according to the current content in the source data area. In other words, the content B in the destination data area may be updated to content C according to the content A in the source data area. Thereafter, if the content in the source data area changes, e.g., changes to content D, the content in the destination data area may be updated according to the changed content in the source data area, i.e., the content C in the destination data area is updated to content E according to the content D in the source data area.

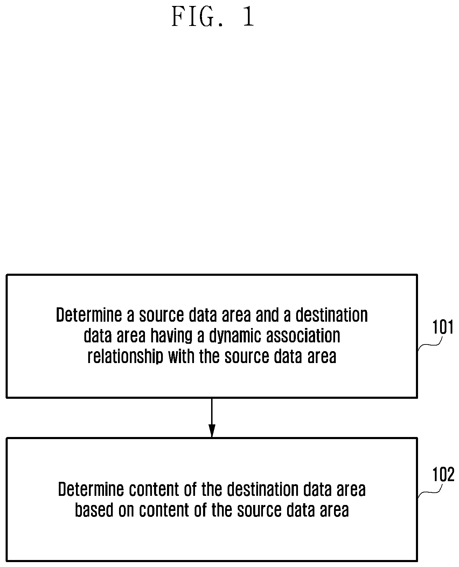

FIG. 1 is a flowchart of a content determining method for an intelligent device according to an embodiment of the present disclosure.

Referring to FIG. 1, the method includes the following.

At step 101, a source data area and a destination data area having a dynamic association relationship with the source data area are determined.

The source data area may be determined according to at least one of the following information: data area bearing selected content; data content in an interface; application relevant information; environmental information; a user's personal information; a data type supported by a destination data area; the user's operation history; the user's instruction; a predefined condition; an obtained dynamic association relationship, etc.

A destination data area may be determined according to at least one of the following information: a destination area of selected content; data content in an interface; application relevant information; environmental information; a user's personal information; a data type of a source data area; the user's operation history; the user's instruction; a predefined condition; an obtained dynamic association relationship, etc.

In an embodiment of the present disclosure, application relevant information includes an application type, an application privilege, application status information, etc.

A dynamic association relationship includes at least one of a dynamic association relationship established by an intelligent device in real time; a dynamic association relationship stored by the intelligent device; a dynamic association relationship downloaded from a network; a dynamic association relationship obtained from another intelligent device, etc.

A dynamic association relationship in an embodiment of the present disclosure may be implemented via various ways including locally established, pre-stored, provided by another intelligent device, downloaded from a network, etc.

In an embodiment of the present disclosure, a dynamic association relationship may be saved and/or shared.

In an embodiment of the present disclosure, saving a dynamic association relationship may include at least one of saving the dynamic association relationship in a form of an application; saving the dynamic association in a form of a file, etc. Sharing a dynamic association relationship may include at least one of sharing the dynamic association relationship with another user; sharing the dynamic relationship association with another intelligent device; sharing the dynamic association relationship to a network, etc.

In an embodiment of the present disclosure, maintaining and dynamically spreading an existing dynamic association relationship through saving and sharing the dynamic association relationship is facilitated.

Hereinafter, various embodiments of the present disclosure are described to illustrate a determination of a source data area. The determination of the source data area may include a step of detecting the source data area. An embodiment of the present disclosure may further include a step of confirming a detected source data area.

For example, detecting a source data area may be implemented in a first manner by detecting the source data area based on a data area bearing selected content.

Herein, a data area bearing selected content may be detected as a source data area. For example, if it is detected that a copy operation is performed on text in a text box, the text box may be detected as a source data area.

An operation in the first manner includes determining selected content according to a user making a selection, providing a pop-up clipboard menu according to an operation of the user such as a touch, configuring a source data area in the clipboard menu, wherein the operation such as a touch may include a single click, a double click, a long press, a slide, a hover of a stylus pen (e.g. an S-pen), etc. However, the present disclosure.

In a clipboard menu provided by an embodiment of the present disclosure, besides conventional options such as copy, cut, and paste, a source data area configuration icon and a destination data area configuration icon may be further included. Further, icons for other options may also be configured in the clipboard menu, e.g., edit icons such as delete and add. If a user copies content and triggers a source data area configuration icon in a clipboard menu, a data area containing the copied content may be detected as the source data area.

In an embodiment of the present disclosure, a colored pattern may be displayed adjacent to each source data area so as to identify each source data area.

Detecting a source data area may be implemented in a second manner by detecting the source data area based on a user's instruction.

Herein, if a system detects that a user has designated a position or an interface element which may be a data area and has provided a source data area designating instruction, the system determines the data area corresponding to the position or the interface element as the source data area.

For example, an implementation of the second manner may include if a system detects that a user long presses a particular position of an interface, the system displays a clipboard configuration menu on the interface. If the system further detects that the user invokes a source data area configuration icon, the system configures the element corresponding to this position as a source data area.

For example, if a user long presses in a blank area of a shopping application interface and clicks a source data area configuration icon after the system pops out a clipboard configuration menu, the system determines the whole shopping application interface as a source data area. A trigger operation such as a long press and a click may be replaced by another operation. However, the present disclosure is not limited thereto.

Detecting a source data area may be implemented in a third manner by detecting the source data area based on data content in an interface.

An intelligent device recognizes data content in a user interface (e.g. a user interface of an application where a source data area is located), and provides the recognized data content to the user. The user selects among the recognized data content of data content in a source data area. The intelligent device determines the source data area according to the user's selection. The data content includes at least one of a data area capable of bearing data content; a data type capable of being differentiated via media form and format; special information capable of being retrieved via content form or semantic analysis, e.g., time, address, name, etc.; and other data content capable of being defined by an automatic determining program.

For example, if a user interface (UI) contains various kinds of data (e.g. text, a website address, an image, a button, etc.), an intelligent device may provide the above recognized data types to a user. The user may select several data types, e.g., the user may select the text type. After the user confirms the selection, the intelligent device may determine a data area bearing the data content of the data type selected by the user as a source data area.

Detecting a source data area may be implemented in a fourth manner by detecting the source data area based on obtained a dynamic association relationship.

An intelligent device may obtain a dynamic association relationship from another intelligent device or obtain the dynamic association relationship from a network. An obtained dynamic association relationship includes information of a source data area (e.g. information for locating the source data area in a user interface) and information of a destination data area (e.g. information for locating the destination data area in the user interface). If there is a plurality of source data areas or a plurality of destination data areas, a dynamic association relationship may further include a correspondence between the plurality of source data areas and the plurality of destination data areas.

For example, an intelligent device may obtain a dynamic association relationship between a source data area A and a destination data area B from another intelligent device. Then, the intelligent device may determine the source data area A and the destination data area B directly according to the dynamic association relationship.

Detecting a source data area may be implemented in a fifth manner by detecting the source data area based on a user's operation history.

In an embodiment of the present disclosure, an intelligent device may be capable of configuring a source data area intelligently according to a user's operation history. The user's operation history may include, but is not limited to, a historical configuration of the source data area of the user.

For example, it may be known from a user's operation history that the user has configured a product search box in a particular shopping application as a source data area many times. Thus, if it is detected that the user opens the shopping application, an intelligent device may automatically configure the product search box as the source data area.

In an embodiment of the present disclosure, a user's operation history may include an operation history of the user on multiple intelligent devices. If multiple users use one intelligent device, they may log in via their user accounts. The intelligent device may record the user's operations according to respective user accounts and upload the operations to a cloud server. The cloud server may obtain the user's operation history based on feedback of various intelligent devices.

Detecting a source data area may be implemented in a sixth manner by detecting the source data area based on a predefined condition.

A predefined condition may be a system default condition or may be a condition configured by a user in advance.

For example, a system may determine a product search box of a shopping application as a source data area by default, or may determine the product search box of the shopping application configured by the user in advance as the source data area. Then, during subsequent configuration of the source data area, if it is detected that the user opens the shopping application, the intelligent device automatically determines the product search box as the source data area based on the predefined condition.

Detecting a source data area may be implemented in a seventh manner by detecting the source data area based on a user's personal information.

A user's personal information may include attribute information such as age, gender, occupation, and language, or may include the user's preference information. A user's preference information may be configured by the user in advance or may be obtained by an intelligent device according to the user's operation history.

For example, it may be known from a user's preference that, when opening a shopping application, the user usually copies website address information and transmits the website address information to other users via an instant messaging application. Therefore, an intelligent device may automatically configure a data area corresponding to the website address information as a source data area when detecting that the user opens a shopping application.

Detecting a source data area may be implemented in an eighth manner by detecting a source data area based on a data type supported by a destination data area.

In an embodiment of the present disclosure, an application where a source data area is located may be referred to as a source application, and an application where a destination data area is located may be referred to as a destination application.

An intelligent device may initially determine a source data area and then determine a destination data area, may initially determine the destination data area and then determine the source data area, or may determine the source data area and the destination data area at the same time.

If an intelligent device initially determines a destination data area and then determines a source data area, in a case where a user interface of a source application includes a plurality of data areas supporting different data types, whereas the destination data area supports merely data content of some particular types, a terminal device may determine the source data area according to a data type supported by the destination data area among various data areas contained in the source application.

For example, a source application may contain a plurality of data areas, e.g., a data area bearing text content, a data area bearing image content, a data area bearing voice content, etc. However, a destination data area may merely support data content of a text type. Therefore, an intelligent device may configure the data area bearing the text content in the source application as a source data area.

Detecting a source data area may be implemented in a ninth manner by detecting source data area based on application relevant information.

Application relevant information includes an application type, an application privilege, application status information, etc.

In an embodiment of the present disclosure, if a destination data area is determined prior to determining a source data area, after the destination data area is configured in a destination application, an application list of source applications may be provided. A user may select a source application from the list of source applications so as to enter into a source application rapidly. In addition, a candidate source application may be determined according to at least one of application relevant information, a data type supported by the destination data area, environmental information, a user's personal information, application relevant information, the user's operation history and device status information.

In an embodiment of the present disclosure, an intelligent device may determine an application priority for respective candidate source applications according to the above information, sort the candidate source applications according to the determined priorities and display the list of the sorted candidate source applications. Then, according to a selection operation of a user selecting at least one source application in the list of candidate source applications and a click operation of the user confirming the selection, the system accesses an interface of the selected source application and displays a clipboard toolbar. Then, a source data area is detected based on the clipboard toolbar. Since the user may rapidly locate the source application via the list of candidate source applications, a rapid switch from a destination application to the selected source application is realized.

Application status information represents a current processing interface of an application. Application privilege includes whether a data area in an application is an input area capable of receiving input, whether the data area may receive content transmitted by a designated application or transmitted by a designated data area of a designated application, or whether content in the data area may be copied, etc.

After switching to a source application, an intelligent device is capable of automatically determining a source data area according to an application type, an application privilege, and application status information, etc.

Detecting a source data area may be implemented in a tenth manner by detecting the source data area based on environmental information.

The environmental information includes time information and/or position information. The position information may include an environmental type obtained based on a position parameter, such as a home, an office, a public area, etc.

Different environments may correspond to different source data areas. For example, if a source application is a contact application, a source data area is a data area bearing contact information in the contact application. If an environmental type is a home, a frequently used contact for this environmental type may be configured as the source data area, or it is possible to further detect the source data area in the frequently used contacts under this environmental type.

The intelligent device may determine the source data area according to one of the above ways, or according to any combination of the above ways.

In an embodiment of the present disclosure, detection of a source data area may be implemented via multiple operations. If a whole user interface is determined as a source data area according to a user's selection operation, in order to determine a further detailed source data area, all selectable areas (e.g. data areas bearing data content) in the user interface may be framed by colored dotted lines denoting that the selectable data areas may be selected as the source data area. At the same time, a selection list may pop up onto the user interface. A corresponding source data area may be selected according to the user's selection operation. The procedure proceeds with the next step after the user confirms the selection. After the configuration of the source data area, if the configuration of the source data area must be adjusted, the user may trigger a predefined icon. After detecting the trigger operation, a system displays a selection list, allowing the user to reconfigure the source data area.

Described above are various embodiments of the present disclosure for detecting a source data area. Those with ordinary skill in the art would know that the above description merely shows some examples. However, the present disclosure is not limited thereto.

In an embodiment of the present disclosure, after a source data area is detected via any manner, the source data area and/or transmission content may be confirmed based on a user's instruction. Therefore, after the source data area is detected, the source data area and/or transmission content are confirmed, thus the source data area and transmission content which are used for subsequent content transmission are determined.

Hereinafter, various embodiments of the present disclosure are provided to describe for determining a destination data area. Similarly, determining the destination data area may include a step of detecting the destination data area. An embodiment of the present disclosure may further include a step of confirming the detected destination data area.

According to an embodiment of the present disclosure, detection of a destination data area may be implemented via the following ways.

Detecting a destination data area may be implemented in a first manner by detecting the destination data area based on a destination area of selected content.

Herein, the destination area for the selected content may be detected as the destination data area (an area receiving the selected content, e.g., an area where content is to be pasted). For example, if it is detected that a paste operation is performed to paste text in a search box, the search box may be detected as a destination data area.

The operation in the first manner includes determining a destination area where the selected content is to be pasted according to a user's selection operation, providing a pop-up clipboard menu according to an operation of the user such as a touch, wherein the clipboard menu is similar to that in an operation for the detection of a source data area; and confirming the selection of the destination data area according to the user's click operation to the destination data area configuration icon in the clipboard menu. Similarly, an operation such as a touch may include a single click, a double click, a long press, a slide, a hover of a stylus pen (e.g. an S-pen), etc. However, the present disclosure is not limited thereto.

In an embodiment of the present disclosure, a colored pattern may be displayed adjacent to each destination data area. The color may be the same as that which identifies the source data area, so as to identify the source data area and the associated destination data area.

In addition to using color for identification, a source data area and a destination data area may be identified using at least one of a figure, a name, a shape and an icon.

By correspondingly identifying a source data area and a destination data area, a user may identify an association relationship between the source data area and the destination data area.

Detecting a destination data area may be implemented in a second manner by detecting the destination data area based on a user instruction.

Herein, if a system detects that the user has designated a position or an interface element as a data area and has provided a destination data area designating instruction, the system determines the data area corresponding to the position or the interface element as the destination data area.

Detecting a destination data area may be implemented in a third manner by detecting the destination data area based on data content in an interface.

An intelligent device recognizes data content in a user interface (e.g. a user interface of an application where the destination data area is located), and provides the recognized data content to a user. The user selects among the recognized data content for the data content in the destination data area. The intelligent device determines the destination data area according to the user's selection. The data content includes at least one of: a data area capable of bearing data content; a data type capable of being differentiated via media form and format; special information capable of being retrieved via content form or semantic analysis, e.g., time, address, name, etc.; and other data content capable of being defined by an automatic determining program.

For example, a UI may contain various kinds of data (e.g. text, a website address, an image, a button, etc.), and an intelligent device may provide the above recognized data types to a user. The user may select several data types, e.g., the user may select the text type. After the user confirms the selection, the intelligent device may determine the data area bearing the data content of the data type selected by the user as the destination data area.

Detecting a destination data area may be implemented in a fourth manner by detecting the destination data area based on an obtained dynamic association relationship.

The implementation of this manner is similar to the fourth manner described above for detecting the source data area and is not repeated here.

Detecting a destination data area may be implemented in a fifth manner by detecting the destination data area based on user operation history.

In an embodiment of the present disclosure, an intelligent device is capable of configuring a destination data area intelligently according to a user's operation history. The user's operation history may include, but is not limited to, a historical configuration of the destination data area of the user.

For example, it may be known from a user's operation history that the user has configured an information input box in a particular instant messaging application as the destination data area many times. Thus, if it is detected that the user opens an instant messaging application, an intelligent device may automatically configure the information input box as the destination data area.

Detecting a destination data area may be implemented in a sixth manner by detecting the destination data area based on a predefined condition.

The predefined condition may be a system default condition or a condition configured by a user in advance.

The implementation of the sixth manner is similar to the sixth manner for detecting the source data area described above and is not repeated here.

Detecting a destination data area may be implemented in a seventh manner by detecting the destination data area based on a user's personal information.

For example, it may be known from the user's preference that when opening an instant messaging application the user usually transmits website address information copied from a shopping application to other users. Therefore, an intelligent device may automatically configure an information input box as a destination data area when detecting that the user opens the instant messaging application.

Detecting a destination data area may be implemented in an eighth manner by detecting the destination data area based on a data type supported by a source data area.

If an intelligent device initially determines the source data area and then determines the destination data area, in a case where a user interface of a destination application includes a plurality of data areas supporting different data types, the intelligent device may determine a data area supporting a data type of the source data area as the destination data area.

For example, a destination application may contain a plurality of data areas, e.g., a data area bearing text content, a data area bearing image content, a data area bearing voice content, etc. However, a source data area may merely support a data content of a text type. Therefore, an intelligent device may configure the data area bearing the text content in the destination application as the destination data area.

Detecting a destination data area may be implemented in a ninth manner by detecting the destination data area based on application relevant information.

In an embodiment of the present disclosure, if a source data area is determined prior to a destination data area, after the source data area is configured in a source application, an application list of destination applications may be provided. A user may select a destination application from the application list, so as to enter into the destination application rapidly. Candidate destination applications may be determined according to at least one of application relevant information, a data type of a source data area, environmental information, a user's personal information, application relevant information, the user's operation history and device status information.

In an embodiment of the present disclosure, an intelligent device may determine an application priority for respective candidate destination applications according to the above information, sort the candidate destination applications according to the determined priorities and display a list of the sorted candidate destination applications. Then, according to a selection operation of a user selecting at least one application in the list of candidate destination applications and a click operation of the user confirming the selection, the system accesses an interface of the destination application and displays a clipboard toolbar. Then, a destination data area is detected based on the clipboard toolbar. Since the user may rapidly locate the destination application via the list of candidate destination applications, a rapid switch from the source application to the destination application is realized.

After switching to a destination application, an intelligent device is capable of automatically determining a destination data area according to an application type, an application privilege, and application status information, etc.

For example, a destination application may include a plurality of data areas, wherein an application privilege of some data areas restricts these data areas from receiving content transmitted by a source application. Therefore, these data areas cannot act as destination data areas. An intelligent device determines a data area capable of receiving content transmitted by a source data area in the destination application as a destination data area, or further detects a destination data area from the data areas capable of receiving the content transmitted by the source data area.

Detecting a destination data area may be implemented in a first manner by detecting the destination data area based on environmental information.

Different environments may correspond to different destination data areas. For example, if a destination application is a contact application, a destination data area is a data area bearing contact information in the contact application. If the environmental type is home, a frequently used contact for this environmental type may be configured as a destination data area, or the destination data area may be detected from the frequently used contacts for this environmental type.

An intelligent device may determine a destination data area according to one of the manners described above, or any combination thereof.

In an embodiment of the present disclosure, detection of a destination data area may be implemented via multiple operations. If a user interface is determined as a destination data area according to a user's selection operation, in order to determine a further detailed destination data area, all selectable areas in the user interface may be framed by colored dotted lines, denoting that the areas may be selected as the destination data area. At the same time, a selection list may pop up on the user interface. A corresponding destination data area may be selected according to the user's selection operation. The method proceeds with the next step after the user confirms the selection. After the configuration of the destination data area, if the configuration of the destination data area must be adjusted, the user may trigger a predefined icon. After detecting a trigger operation, a system displays a selection list, allowing a user to reconfigure the destination data area.

Embodiments of the present disclosure for detecting a destination data area are described above. However, the present disclosure is not limited thereto.

In an embodiment of the present disclosure, after a destination data area is detected via any manner, the destination data area is confirmed based on a user's instruction. Therefore, after the destination data area is detected, the destination data area used for subsequent content receiving is determined according to the user's instruction.

At step 102, content in the destination data area is determined based on the content in the source data area.

Herein, the content in the destination data area is dynamically associated with the content in the source data area. The content in the destination data area may be determined automatically according to the content in the source data area. Therefore, the content in the destination data area may be automatically updated with a change of the content in the source data area without manual intervention, or intervention of a third party device (e.g., a non-networked device and/or a cloud server) or a third party application.

In an embodiment of the present disclosure based on the method shown in FIG. 1, if content in a source data area changes, transmission content corresponding to the content in the source data area may be transmitted to a destination data area based on a dynamic association relationship. In the destination data area, the content in the destination data area is determined based on the transmission content and the determined content is displayed in the destination data area.

Through dynamic association between a source data area and a destination data area, if content in the source data area changes, content in the destination data area associated with the source data area may be changed automatically, and the change may be displayed automatically.

In an embodiment of the present disclosure, determining the content in the destination data area at step 102 includes determining the content in the destination data area based on content in a source data area and/or content associated with the content in the source data area.

In an embodiment of the present disclosure, before determining the content in the destination data area at step 102, the method may further include detecting an update confirmation instruction of a user. As such, the content in the destination data area is not determined before obtaining the update confirmation instruction of the user, which avoids an unexpected content update.

In an embodiment of the present disclosure, determining the content in the destination data area based on the content in the source data area at step 102 includes filtering the content of the source data area, and determining the content in the destination data area based on the filtered content. Filtering of the content of the source data area may be performed based on at least one of the following information: application relevant information; environmental information; a user's personal information; the user's operation history; device status information; a data type supported by the destination data area; a predefined condition; the user's instruction, etc. Device status information includes at least one of remaining battery life of the device, a memory usage ratio, a central processing unit (CPU) usage ratio, a communication status of the device, etc. The predefined condition may be a predefined filtering condition. A system may implement automatic filtering of the content of the source data area according to the predefined condition.

In an embodiment of the present disclosure, the method of FIG. 1 may further include displaying the content in the source data area and/or the content in the destination data area.

In an embodiment of the present disclosure, displaying the content in the source data area and/or the content in the destination data area may be implemented in various ways including split-screen displaying; displaying upon a trigger of user behavioral information; displaying according to a designated order, etc.

In an embodiment of the present disclosure, user behavioral information may include at least one of a content displaying instruction triggered by a user; browsing action information of the user, etc.

A system may directly trigger the display of content in a source data area and/or the destination data area according to a content displaying instruction triggered by a user. The system may determine whether the user has a requirement for displaying the content in the source data area and/or the the destination data area according to browsing action information of the user. If the user has a requirement for displaying the content in the source data area and/or the the destination data area, the system displays the corresponding content. Otherwise, the system does not display content. For example, if browsing action of a user indicates that the user has turned to a next page or has finished browsing the current content, the content in the destination data area is updated according to the content in the source data area. If the browsing action of the user indicates that the user has not yet finished browsing the current content or the user has diverted his/her attention, the content in the destination data area may be not updated.

In an embodiment of the present disclosure, a function menu may be displayed on an assistant displaying interface, and the content in the source data area and/or content in the destination data area may be displayed on the main displaying interface based on the function menu.

In an embodiment of the present disclosure, the method of FIG. 1 may further include determining assistant information for the content in the source data area based on the destination data area; and displaying the assistant information on an interface displaying the content of the source data area. The assistant information for the content in the source data area may be determined according to at least one of the following information of the destination data area: content of the destination data area; a user's operation with respect to the destination data area; data type of the destination data area; etc. The assistant information may include at least one of text summarization relevant to the destination data area; a keyword relevant to the destination data area; a thumbnail relevant to the destination data area; page summarization relevant to the destination data area; multimedia information relevant to the destination data area, etc.

An embodiment of the present disclosure may be implemented on various kinds of man-machine interactive interfaces. An embodiment of the present disclosure may be implemented flexibly.

The embodiments of the present disclosure described above describe exemplary implementations of displaying content of a source data area, content of a destination data area and/or assistant information. However, the present disclosure is not limited thereto.

In an embodiment of the present disclosure, a source data area and a destination data area are in the same application of the same intelligent device; the source data area and the destination data area are in different applications of the same intelligent device; the source data area and the destination data area are in different intelligent devices; there is one source data area and one or more destination data areas; there are one or more source data areas and one destination data area; or, there are one or more source data areas and one or more destination data areas.

In an embodiment of the present disclosure, if there is a plurality of source data areas, determining the content of the destination data area at step 102 may include respectively determining the content of the destination data area corresponding to respective source data areas at the same time based on the content in the plurality of source data areas; or, according to a predefined order, respectively determining the content of the destination data area corresponding to respective source data area according to the content in the respective source data area.

In an embodiment of the present disclosure, the method of FIG. 1 may further include at least one of having multiple destination data areas and, based on the content of at least one destination data area, determining the content in another destination data area; and having multiple destination data areas and, determining the content of each destination data area based on the content of the source data area.

In an embodiment of the present disclosure, various kinds of dynamic data association relationship within one application, between applications, and within one device and between devices may be realized. A user may perform an in-application, a cross-application, an in-device, or a cross device content synchronization operation conveniently.

An application to which a source data area and a destination data area respectively belongs to may be any application in an intelligent device, e.g., a contact application, a call application, a short message application, a camera application, a third party instant messaging application, a shopping application, etc. For example, after detecting that a dynamic association relationship is established between a first application and a second application, a system may automatically transmit a dynamic update of data of the first application to the second application. The second application may display relevant information based on the dynamic update. The relevant information may be the content of the dynamic update, or may be information obtained via processing the dynamic update.

For example, if a user needs some advice from his friend while shopping, a system may automatically transmit updated product link data to an input box of a chat application based on a dynamic association relationship established between a shopping application and the chat application.

In view of the above, according to the flowchart shown in FIG. 1, a dynamic association relationship between multiple applications or between data areas of one application may be established according to various kinds of external information and internal information. If content of one data area changes, content in a data area associated with the one data area may be changed automatically.

In particular, external information and internal information may include one of the following: (1) a user's intention conveyed by an operation instruction (i.e. the user's instruction); (2) a data type and data content; (3) application relevant information, e.g. an application name, an application type, an application status, etc.; (4) environmental information collected by a device via a sensor, e.g., a current time, a position, a scenario, etc.; (5) the user's personal information e.g., identity information of the user, a social relationship, history behavior, etc.; (6) device status information, e.g. data connection status, the device's remaining battery power, scenario mode, etc.

In an embodiment of the present disclosure, the method as shown in FIG. 1 may further include the following.

The destination data area has another dynamic association relationship with another content area, the destination data area acts as a source data area of another data area, and determines the content of said another data area according to the content of the destination data area. In one embodiment of the present disclosure, at least one of the following content is further displayed: content in the source data area, content in the destination data area; content in said another data area; etc.

An embodiment of the present disclosure may also support a serialized association of at least two data areas to realize multi-layer dynamic data processing.

In an embodiment of the present disclosure, the method of FIG. 1 may further include determining another source data area associated with the source data area, determining another destination data area associated with the destination data area according to the another source data area, and determining the content of the another destination data area according to the content of the another source data area.

In an embodiment of the present disclosure, the another source data area associated with the source data area is determined based on at least one of the following information: data content of the data area, a data type of the data area, an application relevant information, environmental information, association information; a user's instruction, etc.

In view of the above, through determining another source data area and determining the content of another destination data area according to the content of said another source data area, an embodiment of the present disclosure may automatically recommend other source data areas to a user and automatically determine the content in the other destination data area, which enables the user to use various relevant information flexibly in various application scenarios.

In an embodiment of the present disclosure, determining the source data area at step 101 of FIG. 1 may include determining the source data area from multimedia information relevant to a realistic scenario.

Herein, the multimedia information relevant to the realistic scenario may be obtained through collecting raw data reflecting the realistic scenario in real time or non-real time by a multimedia collecting apparatus.

The realistic scenario may be a detailed scenario in the objective world, including a street view, people, a plant, an animal, activity, etc. The multimedia information collecting apparatus may include a camera, a recorder, a video camera and other types of information collecting devices. The data source containing the multimedia information generally is a display interface of the multimedia information collecting apparatus. The multimedia information collecting apparatus may collect the multimedia information in real time, or collect the multimedia information in non-real-time. In an embodiment of the present disclosure, the multimedia information collecting apparatus collects the multimedia information in real time.

In an embodiment of the present disclosure, the content of the source data area determined from the multimedia information collected by the multimedia information collecting apparatus in real time changes based on at least one of a user's instruction; and an update of the multimedia information.

In view of the above, embodiments of the present disclosure realize both an automatic change of content of a source data area based on an update of multimedia information and a manual change of the content of the source data area based on a user's instruction.

In an embodiment of the present disclosure, if at least one of the following events happens, it is determined that the content of the source data area changes: (1) The user manually selects a new source data area in the multimedia information; (2) the original source data area in the multimedia information disappears; and (3) an object in the multimedia information becomes a new source data area, etc.

Since the multimedia information collected by the multimedia information collecting apparatus in real time usually includes a plurality of objects containing effective data, it is generally required to detect from the data source a particular object as the source data area. Herein, the determination of the source data area may be implemented in two ways: an automatic detecting manner; and a manual configuration manner. If the content of the source data area is changed, the content of the destination data area will change accordingly. Similarly, a determination of a destination data area may be implemented in two ways: an automatic detecting manner; and a manual configuration manner. It is also possible to display a candidate associated application list to a user according to selected or configured data content and other relevant information. A user may select an associated application from a candidate associated application list and select a destination data area of the associated application.

In an embodiment of the present disclosure, determining the source data area from the multimedia information collected by the multimedia collecting apparatus in real time may include detecting respective candidate source data area from the multimedia information collected by the multimedia collecting apparatus in real time; and determining the source data area from the respective candidate source data area. The source data area may be determined from the respective candidate source data area according to at least one of the following information: data type information of the candidate source data area; pre-configuration, application relevant information; a user's operation history, the user's personal information; the user's instruction, etc. The method of FIG. 1 may further include identifying the respective candidate source data area in the multimedia information.

If there are multiple source data areas, determining the content of the destination data area based on the content of the source data area may include:

(1) Determining the content of the destination data area corresponding to respective source data area at the same time according to the content of the multiple source data areas.

(2) According to a predefined order, respectively determining the content of the destination data area corresponding to respective source data area according to the content of the source data area.

In view of the above, the embodiments of the present disclosure further realize the dynamic association between the destination data area and the realistic scenario. If a detectable or a recognizable object emerges in the multimedia information collected by the multimedia collecting apparatus in real time, a potential application available for dynamic association and a source data area therein may be provided to the user.

In an embodiment of the present disclosure, the method of FIG. 1 may further include displaying the source data area in an augmented reality manner in the multimedia information collected by the multimedia collecting apparatus in real time. An augmented reality manner may include applying virtual information on a position where the source data area is located or a position adjacent to the source data area. For example, a virtual object, scene or system prompt information may be displayed adjacent to the source data area, so as to augment the source data area.

In view of the above, the embodiments of the present disclosure may display a source data area in an augmented reality manner. As such, a user is more likely to notice the source data area.

In an embodiment of the present disclosure, the method of FIG. 1 may further include determining assistant information for the multimedia information based on the destination data area; and displaying the assistant information on an interface displaying the multimedia information. The assistant information may include at least one of a keyword relevant to the destination data area; a thumbnail relevant to the destination data area; a page summarization relevant to the destination data area; multimedia information relevant to the destination data area, etc.

In an embodiment of the present disclosure, displaying the assistant information may include at least one of displaying the assistant information and the corresponding real object in parallel in the multimedia information; displaying the assistant information and the real object in an overlapped manner in the multimedia information; displaying the real object and the assistant information in the multimedia information according to a user instruction; etc.

The assistant information of the multimedia information may be determined based on at least one of the following information of the destination data area: content of the destination data area; a user's operation with respect to the destination data area; a data type of the destination data area; etc.

In view of the above, a change of a destination data area may be reflected in a display interface of multimedia information in a form of assistant information. In other words, the destination data area also impacts the display interface of a realistic scenario, so as to provide various kinds of help information to the user.

In a practical usage scenario, text is a kind of object which is most familiar, having definite meaning and may be directly transmitted to most data areas. Therefore, text is one of the most important objects to be dealt with.

Scenario text detection is a key technique. For improving accuracy, a multi-tunnel image detection method is preferable over a single-tunnel image detection method. However, the complexity of a multi-tunnel image detection method has at least a linear relationship with the number of tunnels. Thus, a multi-tunnel image detection method cannot ensure real-time performance when using limited computing resources.

In order to ensure real time performance an embodiment of the present disclosure provides a dynamic feature space text detecting method based on a feature mapping online study.

In an embodiment of the present disclosure, the data area includes a text object; the detecting respective candidate source data area from the multimedia information collected by the multimedia collecting apparatus in real time includes:

performing the detection in a predefined space detection mode;

if the text object is detected from the multimedia information collected by the multimedia collecting apparatus in real time, performing the detection in a dynamic feature space detecting mode, until the text object is not detected in a first predefined number of consecutive frames, and switching back to the predefined space detecting mode.

The predefined space detecting mode may include performing single-tunnel detection in a predefined number of feature spaces according to a predefined order. The dynamic feature space detecting mode includes obtaining a detected result of a current frame, optimizing the feature space according to the detected result; and applying the optimized feature space to the next frame.

An embodiment of the present disclosure establishes an association relationship between a realistic scenario and an application in an intelligent device.

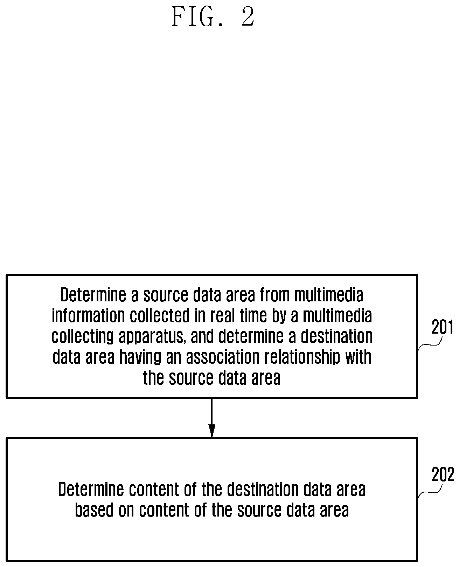

FIG. 2 is a flowchart of a scenario-based content determining method for an intelligent device according to an embodiment of the present disclosure.

Referring to FIG. 2, at step 201, a source data area is determined from multimedia information collected by a multimedia collecting apparatus in real time, and a destination data area associated with the source data area is determined.

At step 202, content of the destination data area is determined based on the content of the source data area.

In an embodiment of the present disclosure, determining the source data area from the multimedia information collected by the multimedia collecting apparatus in real time at step 201 includes detecting respective candidate source data area from the multimedia information collected by the multimedia collecting apparatus in real time; and determining the source data area from the respective candidate source data area.

In an embodiment of the present disclosure, the multimedia information includes a text object; and detecting respective candidate source data area from the multimedia information collected by the multimedia collecting apparatus in real time includes performing the detection in a predefined space detection mode; if the text object is detected from the multimedia information collected by the multimedia collecting apparatus in real time, performing the detection in a dynamic feature space detecting mode, until the text object is not detected in a first predefined number of consecutive frames, and switching back to the predefined space detecting mode. The predefined space detecting mode may include performing single-tunnel detection in a predefined number of feature spaces according to a predefined order. The dynamic feature space detecting mode includes obtaining a detected result of a current frame, optimizing the feature space according to the detected result; and applying the optimized feature space to the next frame.

In an embodiment of the present disclosure, the source data area is determined from the respective candidate source data area based on at least one of a data type of the candidate source data area, pre-configuration; application relevant information; a user's operation history, the user's personal information, the user's instruction; etc.

In an embodiment of the present disclosure, if there are multiple source data areas, determining the content of the destination data area at step 202 includes determining the content of the destination data area corresponding to respective source data area at the same time based on the content of the plurality of source data areas; or, according to a predefined order, respectively determining the content of the destination data area corresponding to respective source data area according to the content of the respective source data area.

In an embodiment of the present disclosure, the method of FIG. 2 may further include determining assistant information for the multimedia information based on the destination data area; and displaying the assistant information on an interface displaying the multimedia information. The assistant information includes at least one of text summarization relevant to the destination data area; a keyword relevant to the destination data area; a thumbnail relevant to the destination data area; page summarization relevant to the destination data area; and multimedia information relevant to the destination data area, etc. Displaying the assistant information may include at least one of in the multimedia information, displaying the assistant information and the real object in parallel; in the multimedia information, displaying the assistant information and the real object in an overlapped manner; based on a user instruction, displaying the real object and the assistant information in the multimedia information, etc. In addition, the assistant information of the multimedia information is determined based on at least one of the following information of the destination data area content of the destination data area; an operation of the user with respect to the destination data area; and a data type of the destination data area.

Based on the method as shown in FIG. 2, in an embodiment of the present disclosure, the data area may be dynamically associated with the multimedia information collected by the multimedia collecting apparatus in real time.

An embodiment of the present disclosure provides a content determining method for an intelligent device.

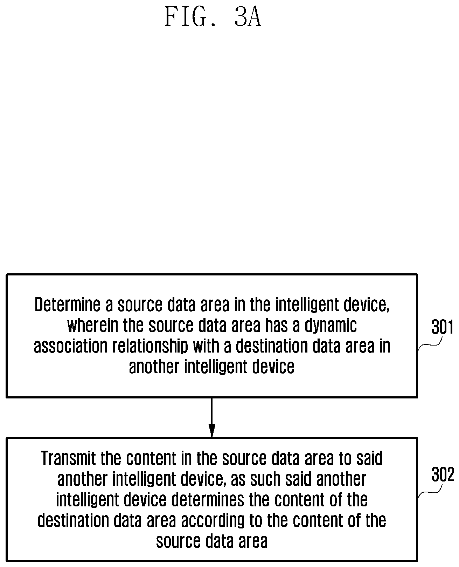

FIG. 3A is a flowchart of a content determining method for an intelligent device according to an embodiment of the present disclosure, which is applicable to a content providing device.

Referring to FIG. 3A, the method includes the following.

At step 301, a source data area is determined in the intelligent device, wherein the source data area has a dynamic association relationship with a destination data area in another intelligent device.

At step 302, the content of the source data area is transmitted to the another intelligent device, as such the another intelligent device determines the content of the destination data area according to the content of the source data area.

In an embodiment of the present disclosure, transmitting the content of the source data area to the another intelligent device at step 302 may include filtering the content of the source data area to determine the content of the destination data area, and transmitting the filtered content to the another intelligent device.

Based on the method shown in FIG. 3A, the content of the source data area determined in the intelligent device acting as a content providing device may be transmitted to another intelligent device. The another intelligent device may determine content of the destination data area. In other words, based on the method shown in FIG. 3A, the content of the another intelligent device may be updated by the content providing device.

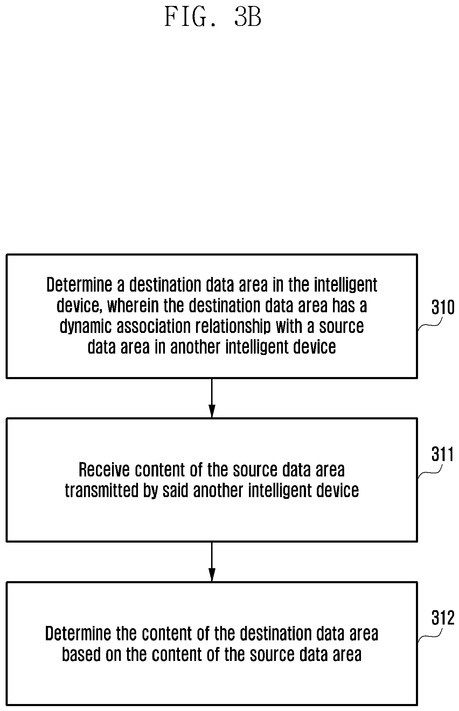

FIG. 3B is a flowchart of a content determining method for an intelligent device according to an embodiment of the present disclosure, which is applicable to a content receiving device.

Referring to FIG. 3B, the method includes the following.

At step 310, a destination data area is determined in the intelligent device, wherein the destination data area has a dynamic association relationship with a source data area in another intelligent device.

At step 311, content of the source data area transmitted by the another intelligent device is received.

At step 312, content of the destination data area is determined based on the content of the source data area.

In an embodiment of the present disclosure, determining the content of the destination data area at step 310 may include filtering the content of the source data area and determining the content of the destination data area based on the filtered content.

Based on the method shown in FIG. 3B, the content of the source data area transmitted by the another intelligent device may be received at the intelligent device acting as a content receiving device, and the content of the destination data area is determined based on the content of the source data area. In other words, based on the method shown in FIG. 3B, the content at the content receiving device may be updated based on the transmission content transmitted by the another intelligent device.

In an embodiment of the present disclosure, an information sharing method for an intelligent device is provided.

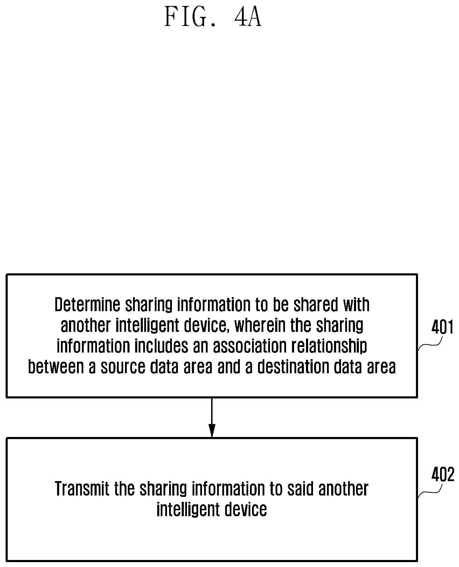

FIG. 4A is a flowchart of an information sharing method for an intelligent device according to an embodiment of the present disclosure, which applicable to an association providing device.

Referring to FIG. 4A, the method includes the following.

At step 401, sharing information to be shared with another intelligent device is determined, wherein the sharing information includes an association relationship between a source data area and a destination data area.

In an embodiment of the present disclosure, determining the sharing information to be shared with the another intelligent device may include displaying a sharing information list containing association relationships available for transmission, and selecting the association relationship to be shared from the sharing information list according to a user's instruction.

At step 402, the sharing information is transmitted to the another intelligent device.

In an embodiment of the present disclosure, the association relationship is a dynamic association relationship.

Based on the method shown in FIG. 4A, an existing association relationship in one intelligent device may be transmitted to another intelligent device, which realizes cross-device sharing of the association relationship.

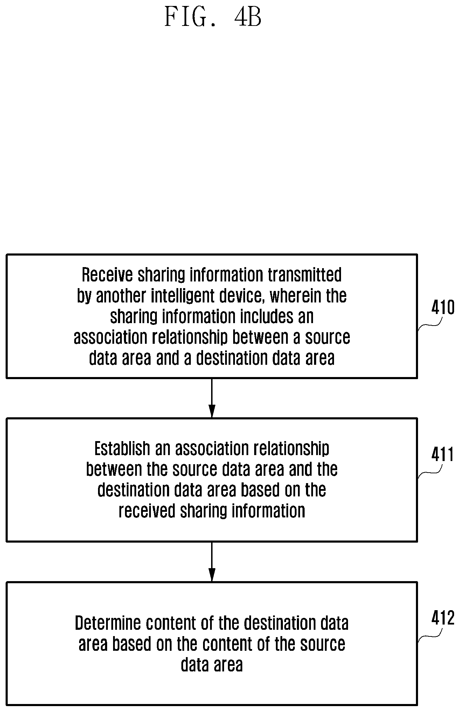

FIG. 4B is a flowchart of an information sharing method for an intelligent device according to an embodiment of the present disclosure, which is applicable for an association relationship receiving device.

Referring to FIG. 4B, the method includes the following.

At step 410, sharing information transmitted by another intelligent device is received, wherein the sharing information includes an association relationship between a source data area and a destination data area.

In an embodiment of the present disclosure, receiving the sharing information transmitted by the another intelligent device may include displaying on the intelligent device a sharing information list containing association relationships available for receiving; and selecting an association relationship to be received from the sharing information list based on a user instruction.

At step 411, an association relationship is established between the source data area and the destination data area based on the received sharing information.

At step 412, content of the destination data area is determined based on the content of the source data area.

In an embodiment of the present disclosure, the association relationship is a dynamic association relationship.

The method of FIG. 4B may further include if an application scenario of the intelligent device does not support the association relationship, downloading an application to the intelligent device, and establishing the association relationship between the source data area and the destination data area based on the downloaded application. In an embodiment of the present disclosure, the association relationship is a dynamic association relationship.

Based on the method shown in FIG. 4B, the intelligent device may receive an association relationship from another intelligent device, so as to realize cross-device sharing of the association relationship.

Hereinafter, the present disclosure is described in detail with reference to certain embodiments.

Embodiment 1

In Embodiment 1 of the present disclosure, an establishment of a dynamic association relationship between applications and a determination of content of a destination data area based on the dynamic association relationship are described with reference to some examples.

For example, in a multi-task scenario, a user must usually transmit data between different applications frequently. For example, the user may need some advice from his/her friend while shopping. In this case, the user may copy a website address of a product page to an input box of a chat application. If the website address bar of the shopping application and the input box of the chat application are associated via the dynamic association relationship (e.g., a data pipeline), it may be realized to automatically transmit the product link when browsing the product.

Hereinafter, the above scenario is taken as an example to describe the establishment and usage of the dynamic association relationship between two applications. A basic method for establishing and using a dynamic association relationship between two applications and performing content synchronization includes the following:

Step (1): detecting a source data area.

Step (2): detecting a destination data area.

Step (3): determining the content of the destination data area based on the content of the source data area, especially, if the content of the source data area changes, and updating the content of the destination data area based on the changed content of the source data area.

In an embodiment of the present disclosure, before determining the content of the destination data area at step (3), the method may further include detecting an update confirming instruction of a user. Through determining the content of the destination data area after obtaining the update confirming instruction of the user, unexpected content update may be avoided.

If the configuration of the source data area is indefinite, it is possible to further clarify that the transmission content must be dynamically transmitted according to the user's selection operation. Thereafter, the transmission content may be selected from the source data area according to the configuration of the user. In addition, during a subsequent transmission of the transmission content between the source data area and the destination data area, the system may perform a dynamic filtering for the transmission content according to a practical situation. If an external environment and a device status change, a system may automatically adjust the dynamic filtering manner. The user may also acknowledge the transmission result (e.g. transmission succeeds, transmission failed, etc.) of the transmission content via various manners according to a requirement. For the established data pipeline, the user may save it to facilitate later usage or share it.

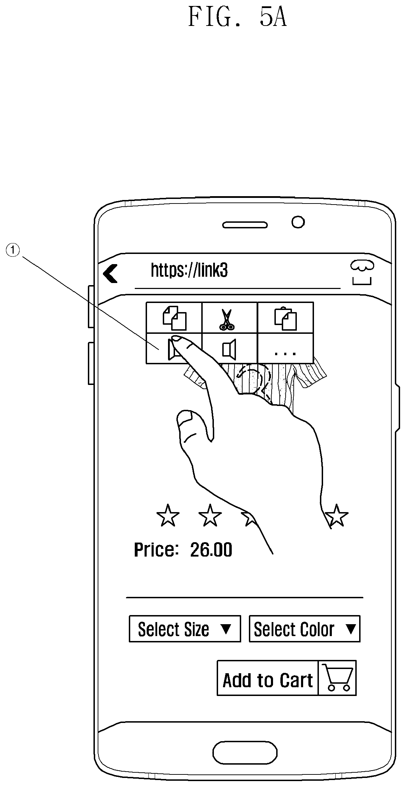

FIG. 5A is an illustration of a determination of a source data area on a full-screen interface according to an embodiment of the present disclosure.

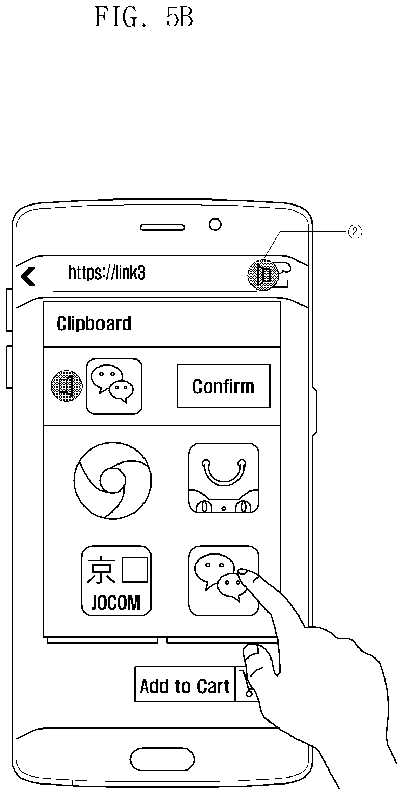

FIG. 5B is an illustration of a determination of candidate destination applications according to an embodiment of the present disclosure.

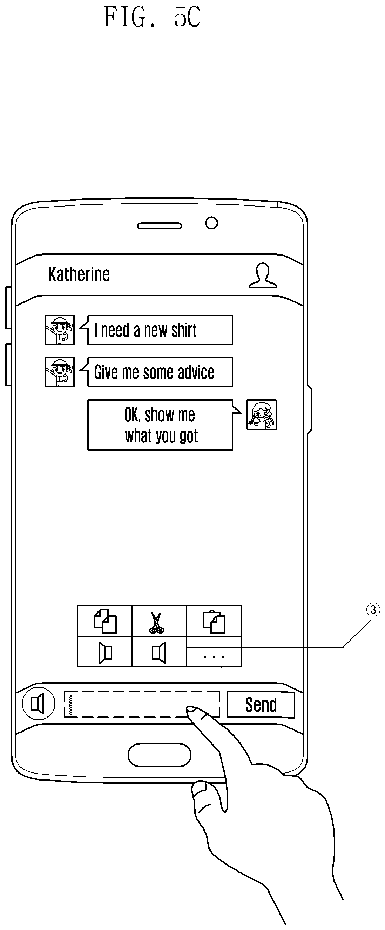

FIG. 5C is an illustration of an interface of a destination application according to an embodiment of the present disclosure.

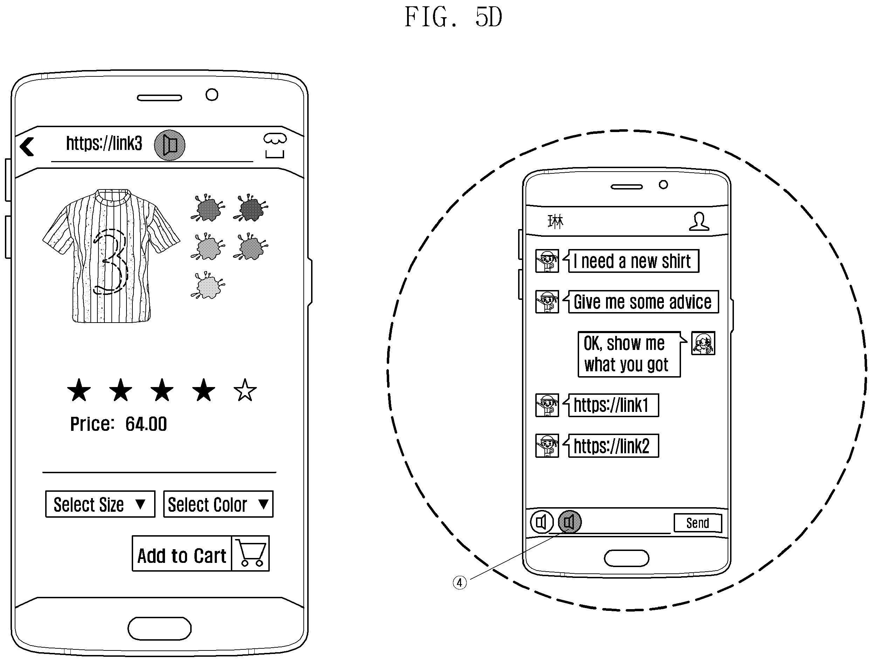

FIG. 5D is an illustration of a destination data area on an interface according to an embodiment of the present disclosure.

Referring to FIGs. 5A to 5D, the operation manner and implementation details of respective steps are described in detail.

Detection of the source data area at step (1) includes the following.

The detection of the source data area may be implemented in the following manners:
In a first manner, the source data area is determined according to content selected by a selection operation of a user.

In FIG. 5A, icon ① denotes a source data area configuration icon. Through clicking icon ①, the data area bearing the content is configured as the source data area.

In a second manner, the source data area is determined directly according to a user instruction.

For example, if a system detects that the user long presses a particular position of the interface, the system presents a clipboard configuration menu on the interface. If the system further detects that the user provides a click operation to the icon ①, the system configures the element corresponding to this position as the source data area.

For example, the user may long press in a blank area of a shopping application interface, and click the icon ① after the system pops up a configuration menu. Thus, the system configures the whole shopping application interface as the source data area. The long pressing and clicking operation in the above procedure may be replaced by other operations.

In FIG. 5A, the user initially selects a website address in the address bar, long presses the address, and clicks the icon ① after the clipboard menu pops up. Then, the address bar is configured as the source data area. In this step, the user may not designate the content to be copied. For example, the user may long press the current page and click the icon ① after the clipboard menu pops up. Thus, the whole interface is configured as the source data area. After the configuration of the source data area is finished, as shown in FIG. 5B, a colored source data area identification icon ② is displayed adjacent to the source data area, wherein the color represents an identity of the data pipeline. The identification manner is described in detail in the following step (2) and the following embodiment 2.

Other manners for detecting the source data area may be similar to those described above and are not repeated here.

In FIG. 5A, step (1) is described taking the full-screen interface as an example. However, the present disclosure is not restricted to the full-screen interface mode, but is also applicable for other different interface display manners, e.g., split-screen mode, edge-screen mode, etc.

For example, in the split-screen mode, if there is a split-screen function menu, the icons and options relevant to the data pipeline may also be configured in the split-screen function menu. The manner for calling out the split-screen function menu may be similar to a conventional method, e.g., detecting an operation of the user clicking a split-screen function button on a screen dividing line, etc. However, the present disclosure is not limited thereto. If the split-screen menu includes the source data area configuration icon ①, based on an operation of the user dragging the icon ① to the data area, the configuration of the source data area is implemented.

For a device with an assistant display and control interface such as an edge screen, the icons and options relevant to the data pipeline function may also be configured in the assistant interface. The manner for calling out the functional menu in the assistant interface may be similar to conventional manners, e.g., detecting a sliding operation of a user's finger on the assistant interface. However, the present disclosure is not limited thereto. After the functional menu is called out, the usage manner of the menu is similar with the split-screen mode.

Based on step (1), if the configuration of the source data area is indefinite, the system may further clarify the source data area. The indefinite configuration of the source data area includes a situation where the selection of the source data area is indefinite, a situation where the data type is indefinite, and a situation where both the selection of the source data area and the data type are indefinite. The above situations may result in the system not being capable of determining the user's intention. Therefore, it is required to guide the user to perform a further configuration. Therefore, the above situations are not differentiated in the following. Accordingly, the following solution is able to deal with an unclear intention of a user in all of the above situations. If the system has determined the type and the content of the data that the user desires to transmit based on the configuration of step (1), this further clarification step may be omitted.

For example, in an embodiment of the present disclosure, if a system has already determined a website address in an address bar as a selected content based on a selection of a user, the following configuration is not required.

In an embodiment of the present disclosure, a whole UI may be designated as a source data area according to a user's selection operation. Since the UI may contain many sub data areas (e.g. an address bar, an image frame, a text box, a button, etc.) and various kinds of data (e.g., a website address, an image, text, button status, etc.), a system may not be capable of determining the type of data or sub data area(s) in which to transmit data. Therefore, the system may guide the user to clarify the source data area via further configuration, e.g., clarify the content and scope of the data that must be transmitted. For this reason, the system may identify selectable data content in the UI via a certain display manner, and display a selectable data content list, e.g., a list of data types corresponding to the data content. The system may frame all selectable data content with colored dotted lines. If the user clicks a dotted frame, the dotted lines become solid lines and the content is highlighted, denoting that the content is selected as the transmission content. Alternatively, the selectable content may be identified via other manners, e.g., a highlight, a 3D effect, a semi-transparent effect, etc. After the user clicks and selects the content, the content is displayed via another display manner which has an obvious visual difference than before, denoting that the content is selected. At the same time, a selection list for the transmission data content pops up on the UI.

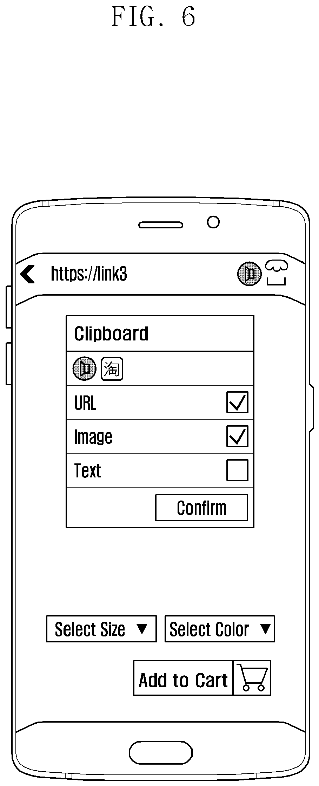

FIG. 6 is an illustration of a selection list for transmission content according to an embodiment of the present disclosure.

Referring to FIG. 6, according to an option selected by a user, a system determines data content corresponding to the option as the data content of a source data area. At the same time, all data areas bearing content of this type on an interface are automatically selected as the source data area. The data content options include at least one or more of the following.

(a) Sub data area, e.g., an address bar, an image frame, a text box, a drop-down box, a single box, a check box, a button in a UI.

(b) Data types may be differentiated via media form and format, e.g., an image, audio, video, text, a website address, a number, position information, etc. Especially, for an interface with a sharing function, page summarization generated for sharing may also be a selectable data content.

(c) Special information may be retrieved via form of the content or semantic analysis of the content, e.g. time, address, name, etc.

(d) Data content may be determined by an automatic determination program. The data content corresponding to respective option in the list may overlap with each other, but does not affect the implementation of the function.

After the system detects that the user confirms the configuration, the system records the configuration of the source data area and proceeds with a next step. If the system is now capable of clarifying the source data area, the configuration is finished. Otherwise, the system further guides the user to perform a further configuration via the above manner based on the foregoing configuration.

After the configuration of the source data area, if the configuration of the transmission content/source data area must be adjusted, the user may click the icon ② in FIG. 5B. After detecting this operation, the system allows the user to reconfigure the source data area.

The detailed description for detection of the destination data area at step (2) includes the following.

The detection of the destination data area is similar to the detection of the source data area at step (1) described above.

In a first manner, the destination data area for the selected content is determined according to a selection operation of the user, i.e., the area where the selected content is to be pasted. The procedure includes determining the destination area (e.g., the area where the content is to be pasted) for the selected content according to the user's selection, and popping up a clipboard menu according to a touch operation (e.g. a long press) of the user. The clipboard menu may be similar to that at step (1). Based on a click operation of the user on the destination data area configuration icon ③ in FIG. 5C, the selection of the destination data area is confirmed. Thereafter, a colored destination data area identifying icon ④ is displayed beside each destination data area, wherein the color identifies an identity of the data pipeline and is identical with that of the source data area, as shown in FIG. 5D.

In a second manner, the destination data area is directly designated according to a user instruction.

According to a user's operation such as a touch, a menu pops up for an area not containing operable content or containing operable content in the UI. Based on a click operation of the user on the icon ③ in FIG. 5C, the UI is configured as the destination data area.

Other manners for detecting the destination data area are similar as those described above and are not repeated here.

If the destination data area is not definitely configured, e.g., the whole UI has been configured as the destination data area according to the user's operation, the system may further clarify the destination data area. Then, all selectable areas in the interface area are framed by colored dotted lines, denoting that these areas are available to be selected as the destination data area. At the same time, a selection list pops up on the interface, a corresponding destination data area may be selected based on a user's selection operation. Then, the procedure proceeds with a next step based on a click operation confirming the selection.

After the configuration of the destination data area, if it is required to adjust the configuration of the transmission content and/or the destination data area, the user may click the icon ④ in FIG. 5D. After detecting this operation, the system allows the user to reconfigure the destination data area.

Further, step (2) may further include a step of rapidly switching from the source application to the destination application.

If the source data area is determined initially and then the destination data area is determined, after the source data area is configured in the source application, it is possible to select candidate destination applications and provide an application list of the selected candidate destination applications, wherein the candidate destination applications may be selected according to at least one of application relevant information, data type of the source data area, environmental information, a user's personal information, application relevant information, the user's operation history and device status information. The user may select a destination application from the application list, so as to open the destination application rapidly.

In an embodiment of the present disclosure, the intelligent device may determine an application priority for each candidate destination application according to the above information, sort the applications according to the determined priorities, and display the application list of the sorted candidate destination applications.

For example, if the system is connected to a wireless wideband network, an application which processes data in real time may be ranked first with a high priority. If the system is not connected to the wireless wideband network, an application which processes data in a non-real-time manner may be ranked first with a high priority, etc. If the user is a female, a shopping application may be ranked first; if the user is male, a game application may be ranked first, etc.

In an embodiment of the present disclosure, an address bar of a shopping application selected by a user is configured as a source data area, and data to be transmitted is a website address of the shopping interface. Therefore, it may be determined based on the type of the data and the usage habit of the user that the user may desire to browse a page in a browser or via an application embedded with a browser, or to share the website address via a chat application. Based on this, the browser, the shopping application and the chat application may be determined as possible destination applications. Based on a sorting algorithm for the destination data area, the system provides a candidate destination application list, as shown in FIG. 5B.

Hereinafter, the sorting algorithm for the destination applications used when configuring the destination data area is described.

In an embodiment of the present disclosure, a score is introduced to represent an association degree between the application and the data content. The score may be calculated based on various characteristics retrieved from information such as application relevant information, a data type of the source data area, environmental information, a user's personal information, application relevant information, the user's operation history and device status information. The calculation method may be adjusted according to data accumulated during the usage of the user, so as to be fit for the usage habit of the user. Several items with highest scores may be selected and ranked in a descending order according to the scores.

Then, according to a selection operation of the user selecting at least one application in the list, and based on a clicking operation of the user to confirm the selection, the system goes to the page of the destination application and displays a clipboard toolbar.

As shown in FIG. 5C, all candidate destination data areas which can receive the transmission content of the source data area are surrounded by dotted frames. Through clicking the dotted frame, it is determined that data will be transmitted to the corresponding data area via the current data pipeline and the displaying manner of the data area may also change. The destination data area configuration icon ③ in the toolbar as shown in FIG. 5C may be clicked to confirm the selection of the destination data area. Thereafter, a colored destination data area identification icon ④ is displayed adjacent to each destination data area, wherein the color represents the identity of the data pipeline and is consistent with the color identifier of the source data area.

Besides the above selecting manner for the destination data area, the selection of the destination data area may also be implemented via other manners, e.g., the system presents a list of candidate applications with a fixed order, or the system does not provide the candidate application list and the user manually switches to the destination application and selects the destination data area.

If the destination data area is determined first and then the source data area is determined, it is also possible to provide a source application list similarly as described above. The user may select a source application from the application list, so as to open the source application rapidly.

Similar as the selection of the source data area, in different screen modes, the selection of the destination data area may be implemented via different manners. The operation steps are similarly to those for selecting the source data area, merely the source data area icon is replaced by the destination data area icon.

After the detection of the source data area and the destination data area is completed, a data pipeline is established between the source data area and the destination data area. Hereinafter, the usage of the data pipeline, i.e. dynamic data transmission, is described.

The detailed description for step (3) includes the following.

The dynamic transmission of the data is triggered by the change of the source data area. In particular, the implementation may include the following: (a) trigger via a particular operation of the user, such as inputting, editing, etc.; (b) the system checks the source data area in real time or periodically, and the transmission of the data starts if data change is detected; and (c) other manners capable for finding the change of the source data area, etc.

For example, if the address bar of the shopping application has been configured as the source data area and the input box of the chat application has been configured as the destination data area, utilizing the triggering manner based on refresh operation detection, it is possible to realize the automatic update of the product link transmitted to the chat application with the change of the browsed product.

For different data content, the dynamic transmission manner may also be different.

For example, for text, the system may choose to copy the whole text. In the case where the text is voluminous and the destination data area has a restriction on the number of inputted words, or the format of the text is inconsistent with that of the destination data area, the system may process the content before transmission.

For an image, audio and video, the system may select a compression manner and a data transmission manner according to various kinds of information including data type and content, a user's personal information, application relevant information, environmental information and device status information. The application relevant information refers to the information provided by the current application that facilitates determining the transmission data content, including a name of the current application, an application type of the current application, a relationship between the current application and other applications, functions in the current application interface, and associated data items, etc. The environmental information includes time information, and/or environmental type of the current user determined according to geographic location and operation history. The device status information includes current operating status of the device such as remaining battery life, memory usage ratio and CPU usage ratio, communication status, etc.

For example, if the system is not connected to a wireless wideband network (e.g. wireless fidelity (WiFi)), if it is required to transmit an image or video to the input box of the chat application, the system may compress the image or video with a relatively high compression ratio before transmitting the image or video, so as to reduce traffic. Alternatively, the system may also transmit a thumbnail of the image or the video to reduce traffic. If the system is connected to a wireless wideband network (e.g. WiFi), the image or video is not compressed or is compressed with a relatively low compression ratio. For an audio file, in order to reduce traffic, the audio file may also be compressed or a key segment may be selected and transmitted.

For example, if the device has enough remaining battery life, after the data pipeline from the shopping application to the chat application is established, the system will transmit data in real time once there is an update. If the device does not have enough remaining battery life, after the same data pipeline is established, the system will transmit data in an accumulated manner, i.e., data is transmitted to the chat application in batch after accumulated to a certain amount, so as to reduce the power consumption caused by network transmission.

If the transmission manner is relevant to multiple factors, the system may select a transmission manner combining the impact of each factor. For example, transmission of an image, video and audio may lead to both power consumption and network traffic consumption. Therefore, the system may select a most effective transmission manner in the case where the remaining battery life is sufficient and there is a WiFi connection. For other cases, the system adopts a compressing before transmission manner.

Further, step (3) may further include selection of the transmission content.

In an embodiment of the present disclosure, the source data area may include a plurality of content, but the destination data area may be updated based on merely some of them, i.e., the content which forms a basis for the update of the destination data area is not the overall content of the source data area. Therefore, when determining the destination data area based on the source data area, it is possible to filter the content of the source data area, and then determine the content of the destination data area according to the filtered content. In other words, it is required to select transmission content from the content of the source data area.

The selection of the transmission content may be executed at the transmitting end (e.g. the source data area side), or at the receiving end (e.g. the destination data area side). It may be executed before or when the dynamic association relationship is established, or may be executed in real time when the content is transmitted after the dynamic association relationship is established.

If the intelligent device establishes the dynamic association relationship between the source data area and the destination data area, if the configuration of the source data area is indefinite, the content (e.g. the transmission content) which forms a basis for the update of the destination data area during subsequent dynamic update may be configured. During the subsequent dynamic update, automatic selection and retrieving of the transmission content may be implemented according to the filtering condition configured in advance. The intelligent device may implement the configuration for the transmission content based on at least one of the application relevant information, environment information, a user's personal information, the user's operation history, device status information, a data type supported by the destination data area, a predefined condition, and the user's instruction.

For example, the transmission content configured by the system in default includes image content and text content. If the source data area further includes video content, the video content is not determined as transmission content. If the result obtained according to the filtering condition defined according to the predefined condition is ambiguous or indefinite, the system may combine the filtering condition and at least one of the following to intelligently select the transmission content and allow the user to select and modify application relevant information, environmental information, a user's personal information, the user's operation history, device status information, a data type supported by the destination data area, a predefined condition and the user's instruction.

For example, the transmission content in the content of the source data area may be selected according to the data type supported by the destination data area. If the destination data area merely supports the data content in the text format but does not support the image and voice format, whereas the content of the source data area includes not only text but also image and voice, the intelligent device automatically selects text content from the source data area and takes the text content as the transmission content and transmits it to the destination data area.

For example, the transmission content in the source data area may be selected according to a user instruction. The user may select the content in a text box in the UI as the transmission content to be transmitted.

However, if the text box includes multiple kinds of text, e.g., a telephone number, an address, a website address, etc., the system may further display a selection list for the data content. The selection list may include various data types, requiring the user to provide a further selection. This process may be executed continuously to guide the user to gradually clarify the configuration until the system is capable of acquiring the intention of the user.

For example, the transmission content from the content in the source data area may be selected according to application relevant information. If the source data area is a search result page of a shopping application and the destination data area is a browser page, according to the application types, the system may automatically choose to copy the website address of the search result to the address bar of the browser. If the destination data area is the search bar of another shopping application, according to the application types, the system may automatically retrieve a keyword and perform a search for the same type of product.

If the data type of the source data area does not match that of the destination data area, the system may not operate the destination data area, or may attempt to perform a data conversion to the data of the source data area and perform the selection and transmit the selected content to the destination data area.

For example, if the source data area is a video player and the destination data area is the search bar of the shopping application, if the search bar merely supports text input, if the user plays a video, the system may not update the destination data area, or the system may attempt to recognize the text in the video, if finding recognizable text, the system transmits the text to the search bar of the shopping application. At the same time, the system may try to detect and recognize an object presented in the video. If the recognition succeeds, the system inputs the name of the object to the search bar. If the search bar also supports image input besides text input, the system may input a screenshot to the search bar upon detecting and recognizing the text or the object.

During the dynamic update procedure, the user may adjust the transmission content in real time. The user may adjust the transmission content via any one or any combination of the following methods provided by the system: (a) a list of selecting manners; (b) a list of selected results; (c) an editor for selected results; and (d) other selecting or editing manners.

For example, if the user chooses to transmit website address, whereas the source data area contains a large block of text and multiple website addresses, the system may initially retrieve the website addresses via semantic and text format analysis and select the website address according to the context of the destination data area. If the destination data area is able to receive multiple website addresses, the system may ask the user whether to transmit some or all of the website addresses. If the user chooses to transmit some addresses, the system may further provide a list containing multiple website addresses from which the user may select the required addresses. Alternatively, the system may display the original content to the user. The part retrieved by the system may be identified via a certain manner. The user may be required to perform selection and removal of the content via particular operations, so as to finish the editing of the selected content.

The operation of step (3) may further include an adaptive changing procedure of the transmission content. During the dynamic update of the content of the destination data area, the transmission content may be adjusted in real time.

Further, if the environment and the device status change, the system may try to adjust the transmission content and prompt the user, so as to ensure that the transmission of the data does not lead to unexpected cost and power consumption or another unfavorable impact.

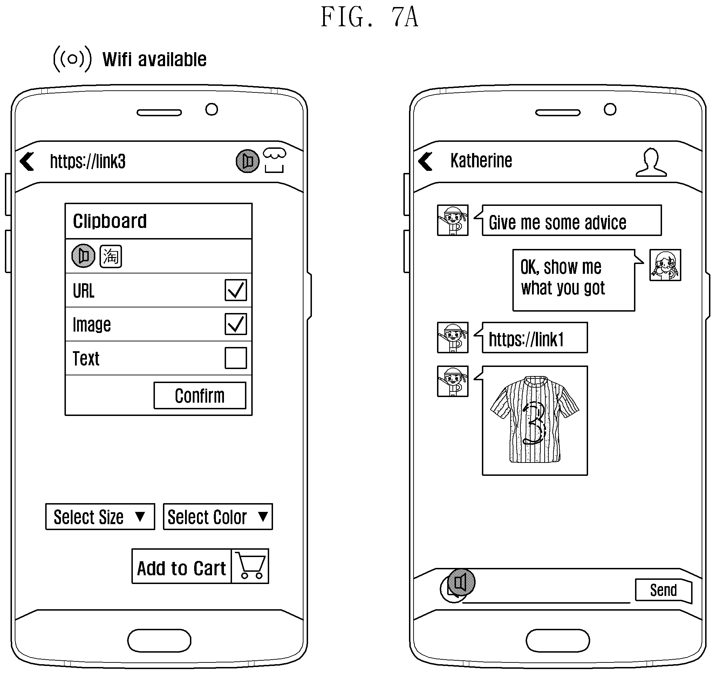

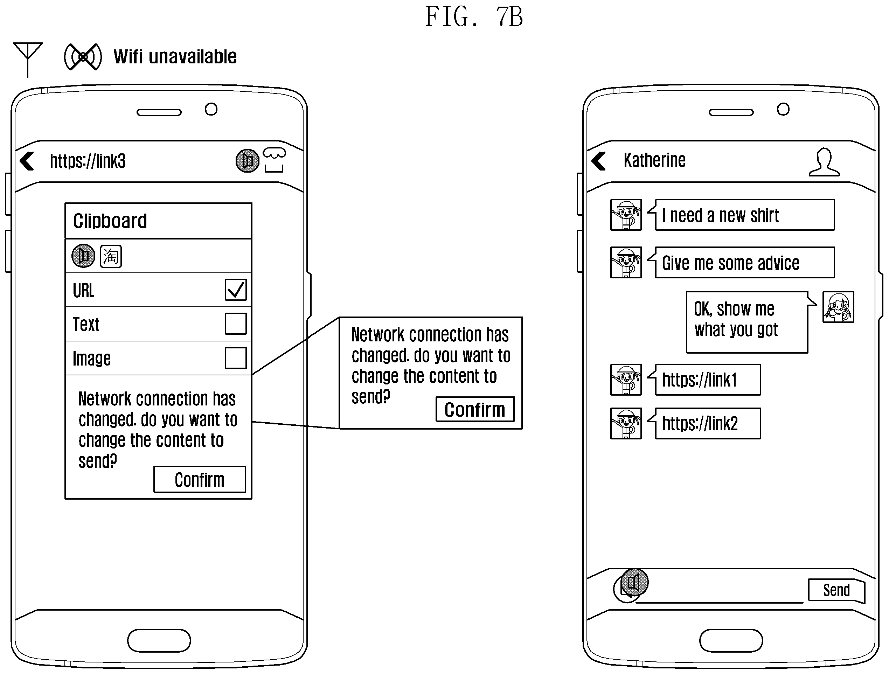

FIGs. 7A and 7B are illustrations of prompting to adjust transmission content if the device status changes according to various embodiments of the present disclosure.

Referring to FIGs. 7A and 7B, if there is a WiFi connection, the user configures to transmit image and universal resource locator (url). If the WiFi is disconnected, the system prompts the user that "WiFi is unavailable at present, do you want to change data transmission configuration?" At the same time, in the displayed content selection list, the image option is ranked in the lower position and is unchecked in default. Based on a confirmation operation of the user, an image is not transmitted to the chat application any longer. As such, the traffic consumption is reduced. Based on an ignore operation of the user, the system may continuously transmit images following the previous configuration.

Similarly, if a device has sufficient battery life, the content may be transmitted according to the manner as originally configured. If the device does not have sufficient battery life, the user may be prompted to transmit merely text content; if the memory or CPU usage ratio is high, the content may be transmitted according to the manner as originally configured. If the memory or CPU usage ratio is relatively low, the user is prompted to transmit merely the text content.

Further, after each data transmission is completed, step (3) may further include a step for confirming the transmission content.

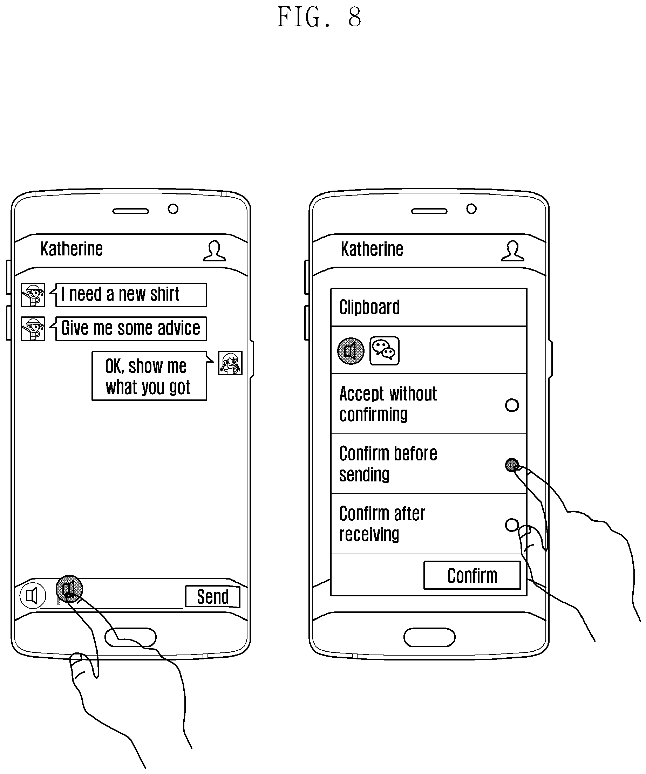

FIG. 8 is an illustration of selecting a transmission content confirming manner according to an embodiment of the present disclosure.

Referring to FIG. 8, there may be three manners for confirming the transmission content. The configuration options may be found in a control menu of the clipboard. The configuration procedure may be as shown in FIG. 8.

A first confirming manner is accept without confirming, i.e. the user does not need to confirm the transmission content. The system directly transmits the selected content to the destination data area after filtering the content of the source data area. The example as shown in FIGs. 7A and 7B adopt the accept without confirming manner. Through steps (1) to (3), the user establishes a data pipeline between the address bar of the shopping application and the input box of the chat application. If the user goes to a new page in the shopping application, the website address in the address bar is changed, and the content in the input box of the chat application also changes immediately.

A second confirming manner is confirm before sending, i.e., after the source data area updates, the system asks the user whether to transmit the content. After the user confirms, the content is transmitted to the destination data area. If the user clicks to cancel or ignore the prompt, the content is not transmitted to the destination data area.

A third confirming manner is confirm after receiving. After the source data area changes, the data which is automatically selected is initially transmitted to a cache queue of the receiving end. At the receiving end, the user may preview the received content in the cache queue, select required content and click to confirm the selection. The selected content is output to the destination data area according to a time sequence. The unselected content is removed from the queue. If the data exceeds the capacity of the cache queue of the receiving end, the part exceeding the capacity may be removed from the queue according to a first-in-first-out principle.

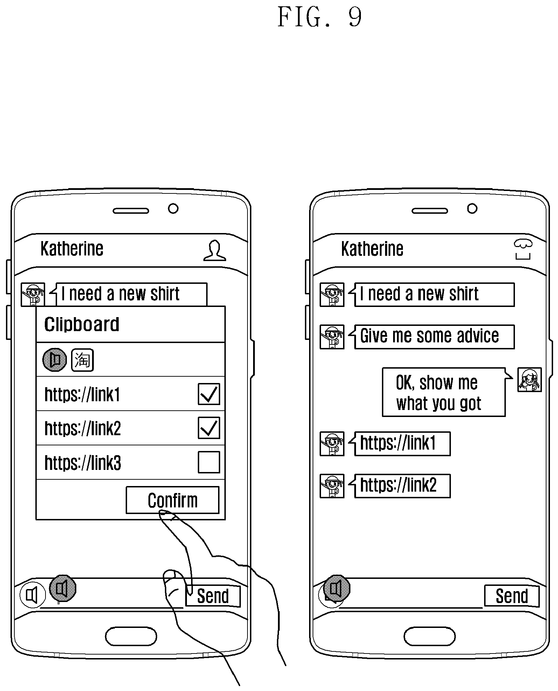

FIG. 9 is an illustration of confirming and browsing of transmission content at a receiving end according to an embodiment of the present disclosure.

Referring to FIG. 9, the step of browsing and confirming the transmission content is shown.

In an embodiment of the present disclosure, the intelligent device may merely display the content of the source data area, i.e., merely display the user interface of the source application, or may merely display the content of the destination data area, i.e., merely display the user interface of the destination application, or the content of the source data area and the content of the destination data area may be displayed at the same time.

If the intelligent device is configured with the full-screen display mode, the display may be provided according to a designated order. For example, there may be various manners for the switching the updated interface. For the source data area and the destination data area, the system enables the user to respectively configure whether a switch is required after an update. If the initial main interface of the system is the source data area interface, and if the user configures a source data area to be updated without a switch, the system stays at the current interface after detecting the update of the source data area, and the update of the destination data area is performed in the background. If the user chooses to switch after an update, the system automatically switches to the application interface where the destination data area is located after detecting the update of the source data area, accomplishes the update of the destination data area and displays the updated result.

If the initial main interface of the system is the destination data area interface, and if the user configures the destination data area to be updated without a switch, the system will stay in the current interface after an update happens to the source data area and merely display an updated result of the destination data area, and the update of the source data area is implemented in the background. If the source data area and the destination data area are configured to switch after an update, and if the initial main interface is the source data area, the system will switch the main interface to the destination data area side after the source data area updates, and return to the source data area side after the update of the destination data area is accomplished.

In addition, the intelligent device may display the content of the source data area and/or the content of the destination data area based on a user's behavioral information. The user's behavioral information may include a content displaying instruction triggered by the user. The intelligent device displays the content of the source data area or the content of the destination data area according to the instruction triggered by the user.

The user behavioral information may include browsing action information of the user. For example, it may be a browsing action with respect to the content of the destination data area. The browsing action of the user may be detected via a visual focus, so as to determine whether the user has finished browsing the content of the destination data area before update. If not finished, the content of the destination data area may not be updated temporarily. After it is detected that browsing is finished, the update operation is performed.

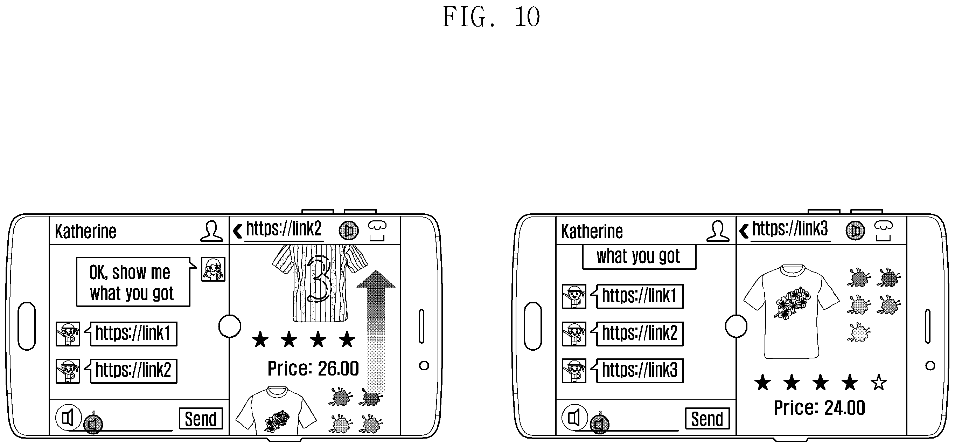

FIG. 10 is an illustration of a display manner for a split-screen mode according to an embodiment of the present disclosure.

Referring to FIG. 10, in the split-screen interface, if the interface displays both the source data area and the destination data area, the update of them may be presented in the interface simultaneously.

If there is an assistant display and operation interface such as an edge screen, the system may display icons representing the source data area and the destination data area in the assistant interface. If the system detects that the user clicks an icon in the assistant interface, the main interface shows the interface of the corresponding data area.

The established data pipeline may be saved in the form of an application. In the clipboard menu, if it is chosen to save the current data pipeline, a list containing all current data pipelines pops up. The user may select all data pipelines required to be saved and clicks save. Thus, the selected data pipelines are saved in the form of applications and presented in the system interface. If the user clicks an application, the relevant data pipeline and application are activated at once. The application may also be shared with other users in the form of a file.

If a device receiving the file also has all of the relevant applications, the same effect as on the original device may be provided if the file is clicked.

Detailed application scenarios in Embodiment 1 will be further described with reference to Embodiment 5.

Embodiment 2

In Embodiment 2, establishing the association relationship (e.g., a data pipeline) between a realistic scenario and an application of a device is described in detail. The realistic scenario may be a detailed scenario in the real world, such as a street view, people, a plant, an animal, activities, etc.

The raw data may be obtained directly from the realistic scenario and may be multimedia information such as an image, a video and audio. Therefore, the source data area containing the realistic scenario data is generally a display interface with a camera or recorder function. The multimedia information may be obtained via a real time manner or a non-real-time manner.

Herein, the description is provided taking the camera interface as an example. An embodiment of the present disclosure is applicable for copying and transmitting dynamic data via a data pipeline, and may also form a part of a method for dynamically or statically obtaining data from the realistic scenario and transmitting the data, e.g., copying and pasting an object from the realistic scenario via a clipboard.

The establishment of the data pipeline between the realistic scenario and the application includes the following:

Step (1): configuring the realistic scenario as a data source.

Step (2): selecting an object in the realistic scenario as a source data area.

Step (3): configuring a destination data area.

Further, the process may further include:
Step (4): determining content of the destination data area based on the content of the source data area, especially, if the content of the source data area changes, updating the content displayed in the destination data area based on the change of the content of the source data area.

In addition, the change of the content of the destination data area may also affect the display manner of the realistic scenario. If the system detects that the user has associated the data source in the realistic scenario and the application data area, the system may record the association, such that the association may be utilized rapidly in the same scenario.

Hereinafter, a detailed description is provided for the implementation of each step.

Step (1): configuring the realistic scenario as the data source.

One implementation of the step (1) may include embedding the dynamic data association function provided by the present disclosure into a camera.

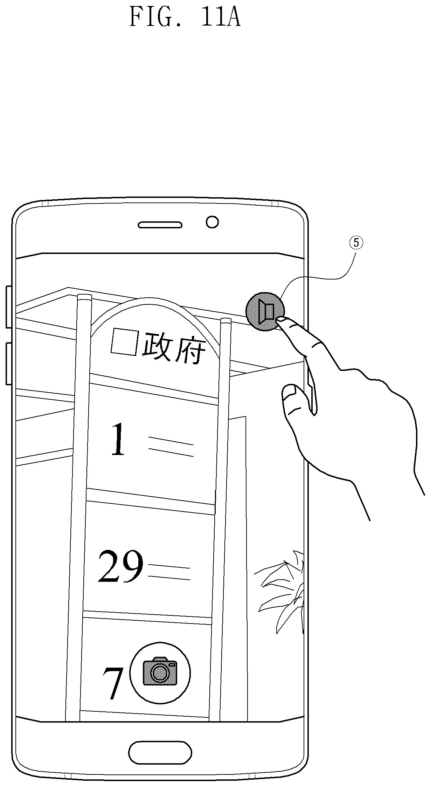

FIG. 11A is an illustration of configuration a camera application as a data source according to an embodiment of the present disclosure.

Referring to FIG. 11A, the camera application is opened, icon (5) representing the source data area may be clicked to configure the camera application as the data source.

Alternatively, according to the manner described in embodiment 1 of the present disclosure described above, a long press may be provided to the display interface, or a physical button or a combination of several physical buttons may be pressed, and a clipboard menu pops up. Then icon ① may be clicked to configure the camera application as the data source. After the configuration is finished, icon ② may appear in the camera application interface.

Step (2): selecting an object in the realistic scenario as the source data area.

Since the realistic scenario usually includes multiple objects containing effective data, it is necessary to designate a particular object as the source data area.

There may be two manners for configuring the source data area in the practical scenario.

One is a system automatic detecting manner.

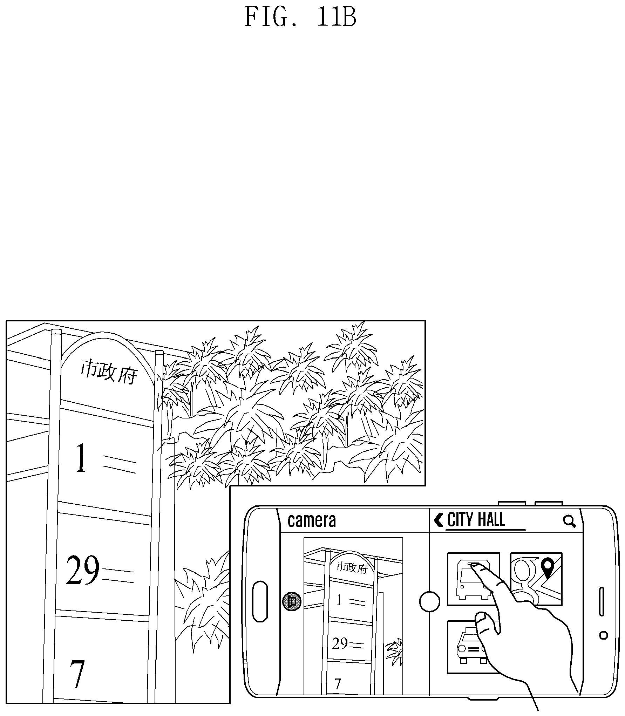

FIG. 11B is an illustration of identifying a source data area in a data source according to an embodiment of the present disclosure.

Referring to FIG. 11B, after the camera application is configured as the data source, the system automatically performs detection in a visible area. Each detected object is identified by a frame of a particular color (e.g. yellow). A detected object is a candidate source data area. One or more objects may be selected from the detected objects as preferable objects according to a result of the detection and recognition and factors such as association degree with the application. The selected preferable object(s) may be respectively identified by a frame of a second particular color (e.g. green). A preferable object is a source data area. The system may change the preferable object according to the object clicked by a user. In an embodiment of the present disclosure, the system detects the text and figures in a bus station scenario and identifies them by a yellow frame, wherein "City Hall" has a definite meaning and therefore is selected as a preferable object and is identified by a frame of the second particular color.

A second manner is a manual configuration manner. As described above in embodiment 1, it is possible to click the icon ② to pop up the content selecting menu. The user may manually select the data content required to be transmitted.

Besides the identifying manner displayed in FIG. 11B, the object recognized by the detection process may also be identified by other augmented reality manners, e.g., a non-rectangle identifying frame, a semi-transparent or highlighted display, displaying a label or icon besides the object, or replacing the original object by a particular visual element such as a 3D model, etc.

No matter which identifying manner is adopted, a recognizable real object and a non-recognizable real object should be differentiated, and preferable and non-preferable objects should also be differentiated.

Besides differentiating preferable and non-preferable objects, the system may further present a difference in the displaying manner of the objects in the realistic scenario with respect to object type, association operation and recognition confidence.

For example, a recognizable text object, people, an animal and a man-made object may be differentiated via identifying frames of different shapes, or via different types of icons displayed beside them.

For example, for an object which has once been recognized, it may be highlighted via a certain display manner such as highlighting. For example, a confidence level for the recognition of the object may be denoted by the color of the identifying frame.

For enabling the user to perform various operations on the object in the realistic scenario, the system may recognize the intention of the user with respect to an object according to the operating manner and the visual element operated by the user, wherein the operating manner may include a long press, a short press, a light press, a heavy press, a single click, a double click, etc. The operated visual element may include the object itself, an object identifying frame, a contour of the object, an icon of the object, an object label, etc.

For example, for a recognized object, the user may want to open an application relevant to the object, or may need to check whether the recognized result is correct before opening the application. One possible solution includes if the user clicks the object itself, the system displays the recognized result of the object. If the user clicks an icon beside the object representing an application relevant to the object, the system turns to a data area configuration step and displays a candidate application interface. Another possible solution includes if the user presses the object lightly, the system turns to the data area configuration step. If the user presses the object heavily, the system displays the detailed information about the object such as the recognized result.

The system may allow the user to modify and edit the recognized result. The system may accept the following modification and editing information from the user: (a) a judgement on whether the result is correct; (b) a result of complete or partially correct; (c) an attribute of the recognized result, such as a position and a size; and (d) other information affecting the correctness of the result, etc.

For example, if the text recognition result of the system for the current scenario is incorrect, the user may have the system enter into a result editing mode by, for example, long pressing the recognized result. In the editing mode, the system allows the user to modify the result or directly input the correct result. After confirmation, the system proceeds with following a processing step according to the new recognized result. In addition, the system may also allow the user to directly deny the recognized result. After confirmation, the system may display the object via a particular display manner, e.g. by gridlines in a particular color (e.g. gray), or may treat the object as a non-recognizable object. The system may allow the user to identify a non-recognizable object via a manner such as selecting a region and labeling the identified object. After the labeling operation, processing of the non-recognizable object is similar to that of the object that has been correctly recognized. The system may allow the user to adjust the identification frame and the contour via operations such as dragging.

Step (3): configuring the destination data area.

According to the selected or configured data content and other relevant information, the system may display a candidate associated application list, as shown in FIG. 11B. The selection and sorting of the applications are similar to Embodiment 1 described above.

If the system detects that the user changes the selection of the preferable object or the filtering condition, the candidate application list will automatically change. The user selects at least one destination application from the candidate application list. After the user clicks to confirm, the system goes to the destination application. Then, the user must select a destination data area in the destination application. The selection manner is as described above in embodiment 1. In this embodiment, according to the destination "City Hall" selected in the previous step, the system provides options including a bus inquiry application, a map application and a taxi application. The user may select the bus inquiry application and confirm the selection.

The present disclosure is not limited to displaying the candidate association application list. It is also possible to copy the data to a designated area according to the selection operation of the user, as described above at step (2) of Embodiment 1.

Step (4): if the content of the source data area changes, updating the content of the destination data area according to the change of the content of the source data area.

After the data pipeline is established, if the data pipeline is configured to use the accept without confirm manner, the initial data content selected by the user will be transmitted to the destination data area immediately. If the data pipeline is configured to use the confirm before sending manner, the system will ask the user whether to transmit the selected content. If the data pipeline is configure to use the confirm after receiving manner, the data content is transmitted to the cache of the receiving end. In addition, according to data type, application scenario and other information of the destination data area, the selection and displaying manner for the recognized result in the source data area may also change.

Then, as described above, the data update in the source data area may lead to a change of the destination data area.

In the case where the source data area is a realistic scenario, if one of the following events happens, it may be determined that the data of the source data area is updated.

(1) The system detects that the user manually selects a new preferable object; (2) the original preferable object disappears in the current scenario, and another object in the scenario becomes a preferable object.

Otherwise, the content in the destination data area remains unchanged. Therefore, even if the scene captured by the camera has changed, as long as the preferable object does not change, no data will be transmitted, which avoids unnecessary repeated transmission.

In addition, in the case where there are multiple candidate data areas in the scenario, if the option "traverse all of the current objects" in the clipboard menu is selected, the system configures a respective candidate data area in the current scenario as the preferable object (i.e. a source data area) in turn, to automatically finish the update of multiple source data areas. This function is capable or realizing batch processing of multiple objects in the scenario.

In this embodiment, the data pipeline is configured as the accept without confirm manner. After the data pipeline is established, the detected text "City Hall" is transmitted to the destination data area immediately. At the same time, since the bus line search bar of the bus inquiry application has been configured as the destination data area, the priority of figures detected in this scenario will be greater than for "City Hall." However, since "City Hall" is still in the current scenario as the preferable object and the user has not manually selected another preferable object yet, the content in the search bar is not updated by the figures in the scenario at once. Thereafter, the system detects that the user manually clicks the bus line in the scenario. The preferable object changes, and the content in the search bar of the bus inquiry application also changes, and an inquiry result for the bus line is provided.

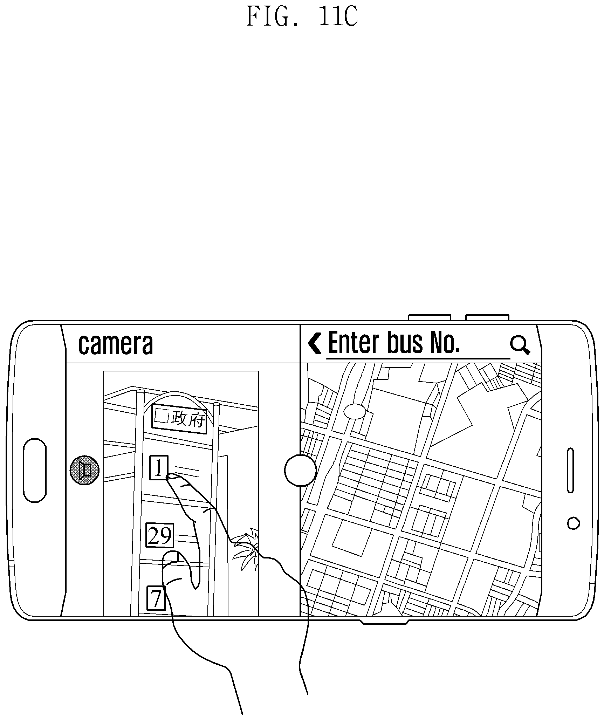

FIG. 11C is an illustration of a change of content in a destination data area with the content in a source data area according to an embodiment of the present disclosure.

Referring to FIG. 11C, an exemplary process that the data of the destination data area changes with the data of the source data area is shown.

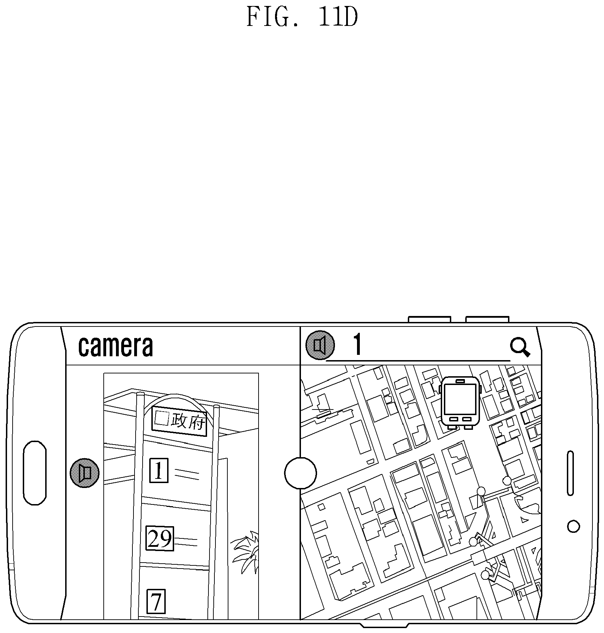

FIG. 11D is an illustration of a change of content in a destination data area with the content in a source data area according to an embodiment of the present disclosure.

Referring to FIG. 11D, after the pipeline is established, the user changes the shooting area. "City Hall" is moved out of the shooting area and the bus line is still in the shooting area. The preferable object and the content in the search bar are automatically changed to the detected line number.

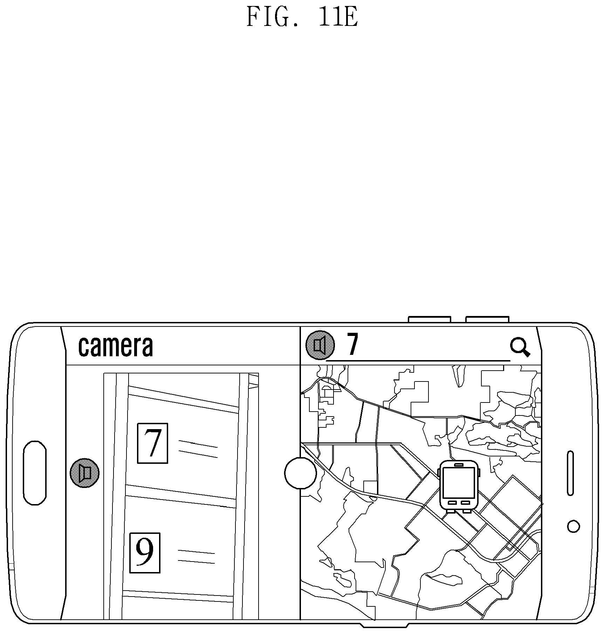

FIG. 11E is an illustration of a change of content in a destination data area with the content in a source data area according to an embodiment of the present disclosure.

Referring to FIG. 11E, if "City Hall" is moved out of the shooting area, there is no recognizable text object in the area, thus the content in the search bar remains unchanged.

Hereinafter, the impact of the destination data area to the displaying interface of the realistic scenario is described.

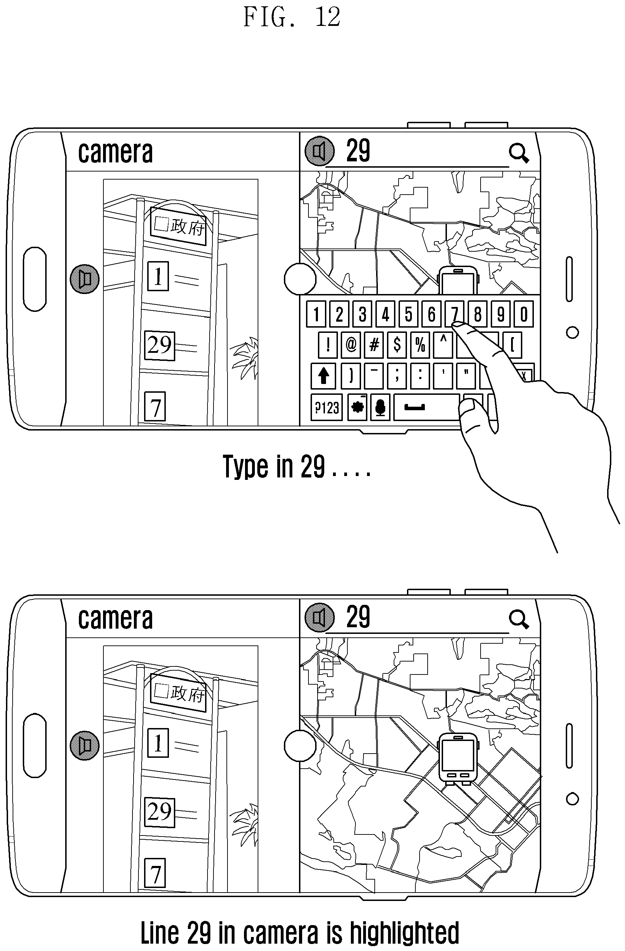

FIG. 12 is is an illustration of a change of displaying multimedia information with a destination data area according to an embodiment of the present disclosure.

Referring to FIG. 12, if the source data area is the displaying interface of the realistic scenario, the operation of the user in the destination data area and the application (APP) for establishing the data pipeline may impact the display manner of the realistic scenario. The change of the display manner mainly includes two aspects.

The first aspect is the change of the preferable object. As shown in FIG. 12, a data pipeline has been established between the camera application and the bus inquiry application. The user inputs number 29 in the search bar. Then, the system detects in the realistic scenario whether the number 29 exists. If number 29 is detected, it is automatically configured as the preferable object. If number 29 is not detected, the preferable object does not change.

The second aspect is that the summarization information of the updated result of the destination data area may be displayed in the interface where the source data area is located. There may be different types of summarizations for different types of destination data areas. For a destination data area which can receive text input, the summarization information may be a screenshot, a text summarization, or a keyword of the destination data area. For a destination data area which can receive image and video, the summarization may be a thumbnail of a particular type. The thumbnail may be a screenshot of the updated destination data area, or a screenshot of the application interface where the destination data area is located, or may be an interface summarization of the destination application generated via a sharing function, or may be a thumbnail in other forms provided by the destination application. It is possible to configure in the clipboard menu whether to display the thumbnail and display which type of thumbnail.

The summarization of the updated result may be displayed beside the real object, in an overlapped manner with the real object, or via other manners of displaying the summarization together with the real object. Since the display of the summarization may cover the realistic scenario, the system may allow the user to adjust the display position of the summarization via some manners, e.g. dragging.

Hereinafter, automatic recording of the data pipeline is described.

After the user associates the object in the realistic scenario with a data area by a data pipeline, the association between the object and the data area is recorded by the system. When detecting the same object again in the realistic scenario, the system displays a semi-transparent destination data area icon aside of the object. The icon indicates that there is a data area associated with this object. If the icon is clicked, a list pops up. The list contains candidate data areas sorted according to priorities. Each data area is described by its position. The description may be provided in progressive layers, e.g., WeChat-contact-xxx. If there are many layers, the intermediate layers may be represented by an ellipsis sign. The calculation of the priority may be similar to that for the destination data area. If the user clicks one candidate destination data area, the system establishes the data pipeline between the realistic scenario and the destination data area according to the previously recorded configuration.

In a practical application scenario, text is most familiar, has a definite meaning and can be transmitted directly to objects in most data areas. Therefore, text is one of the important objects in the embodiments of the present disclosure.

Scenario text detection is a core method for the present disclosure. From the view of increasing an accuracy ratio, the method of multi-tunnel image detection is better than single-tunnel image detection. However, the time complexity of the multi-tunnel detection has at least a linear relationship with the number of tunnels. Therefore, the multi-tunnel detection cannot ensure real-time performance if the calculating resources are limited.

In order to address the issue of real-time performance, an embodiment of the present disclosure provides a dynamic feature space text detection method based on a feature mapping online study.

In this method, the system switches between two detection modes according to a detection and recognition result. If no effective text object is detected in several consecutive frames, the system operates in the preconfigured space detection mode, i.e., performing single-tunnel detection in preconfigured n feature spaces in turn according to a certain order. If an effective text object is detected for the first time in the kth feature space, the system enters into the dynamic feature space detection mode, and switches back to the preconfigured space detection mode if no effective text object is detected in several consecutive frames. The so-called dynamic feature space refers to, after obtaining the detection and recognition result rt for the current frame xt according to the current feature space, the system optimizes the feature space according to the result, and applies optimized feature space to the next frame $x_{t+1}$. This procedure may be expressed by Equations (1) and (2) as follows:

[Math Figure 1]

$$r_t = f(s_t, x_t) \dots \dots (1)$$

[Math Figure 2]

$$s_t = g(s_t, r_t, r_{t-1} \cdots) \dots \dots (2)$$

Herein, $r_{t-1}$ denotes the last detection and recognition result of the current subframe, and st denotes the feature space adopted for the current subframe. An initial value for the kth feature space of an online optimizing process function g is S0. The function g minimizes or maximizes an object function which describes a differentiation degree between foreground points belonging to a text object and background points not belonging but adjacent to the text object. The foreground points and the background points come from the detection and recognizing result of several frames, and each frame may have a different weight.

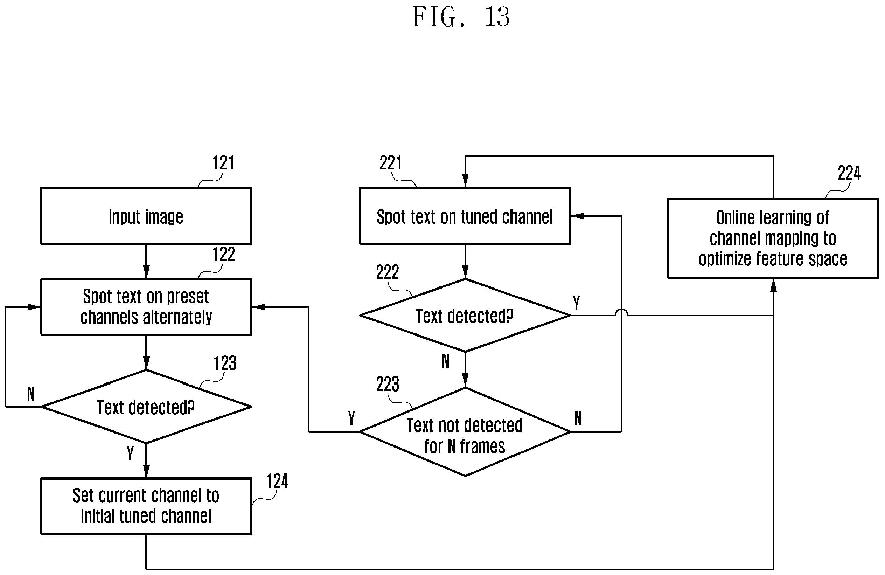

FIG. 13 is a flowchart of a method of recognizing text from multimedia information according to an embodiment of the present disclosure.

Referring to FIG. 13, the method includes a preconfigured space detection mode and a dynamic feature space detection mode. The preconfigured space detection mode include steps 121-124. The dynamic feature space detection mode includes steps 221-223. Through step 224, the preconfigured space detection mode and the dynamic feature space detection mode are combined.

The preconfigured space detection mode includes the following.

Step 121: inputting an image.

Step 122: alternatively detecting text in multiple preconfigured channels with respect to the image.

Step 123: determining whether text is detected, if yes, proceeding to step 124 and subsequent steps; otherwise, returning to step 122 and its subsequent steps.

Step 124: configuring the current channel as the initial tuned channel. Now, the preconfigured space detection mode is finished and step 224 is executed.

Step 224: online learning of channel mapping to optimize feature space, it includes: obtaining the detecting and recognizing result of the current frame, optimizing the feature space according to the detecting and recognizing result. Then, step 221 of the dynamic feature space detecting mode is executed.

The dynamic feature space detecting mode includes the following.

Step 221: detecting text on the online learning dynamic channel.

Step 222: determining whether text is detected.

If yes, step 224 is executed; otherwise, step 223 is executed.

Step 223: determining whether no text is detected in N frames (N is a preconfigured integer). If yes, step 122 of the preconfigured feature space detection mode and its subsequent steps are executed; otherwise, returning to step 221.

One implementation of the method shown in FIG. 13 is as follows.

The preconfigured feature space adopts a YCb-Cr color space. In the case where no effective text object is detected, for the current image frame, the system performs text detection on one of the channels of Y, Cb and Cr and switches the channels in turn. If the effective text object is detected for the first time, the system obtains a foreground point set {x}, and takes all points inside the text object circumscribed frame except for the foreground points as background points. Incremental linear discriminant analysis (LDA) is taken as the optimizing method for the feature space. Through trajectory optimization, an optimized feature map may differentiate the foreground points and the background points may be obtained and may be used as the feature space for the detection of the next frame. After the detection and recognition result of the next image frame is obtained, the previously accumulated foreground points and background points are weighted by a fading constant $\gamma$ and then combined with the result of the current frame, and a new feature space is obtained utilizing the incremental LDA, and so on. In the case where no effective text object is detected in 10 consecutive frames, the system switches to the mode of detecting using Y, Cb and Cr channels in turn.

Based on the above method, it is possible to implement scenario text detection and recognition accurately and effectively. As such, the system is capable of displaying the practical scenario and the text object therein in real time according to the manner described in an embodiment of the present disclosure.

In embodiment 5, the application scenario of embodiment 2 described above will be further described.

Embodiment 3

In Embodiment 3, the serially association of more than two data areas is described.

In daily life, to accomplish a task, a plurality of applications may be utilized in series. For example, if the user hopes to find online comments for multiple restaurants he saw and send the comments to a friend, three steps may be involved: photographing using a camera and retrieving the name of the respective restaurant, searching for comments of the restaurant using a food comment application, and sending the comments to the friend using a chat application. In this situation, if the user associates the three applications serially into one application via establishing data pipelines, the operation complexity can be reduced significantly and work efficiency may increase.

Hereinafter, the above task is taken as an example to describe the method for serially connecting more than two applications via establishing multiple data pipelines.

In the serially connected data pipelines, each data pipeline may be implemented utilizing the method described above with reference to Embodiment 1 or Embodiment 2. The difference lies in that if the data is updated, the switching manner of the interfaces of the associated multiple applications is different from that of a single data pipeline, so as to ensure that the user can clearly see the complete data update procedure.

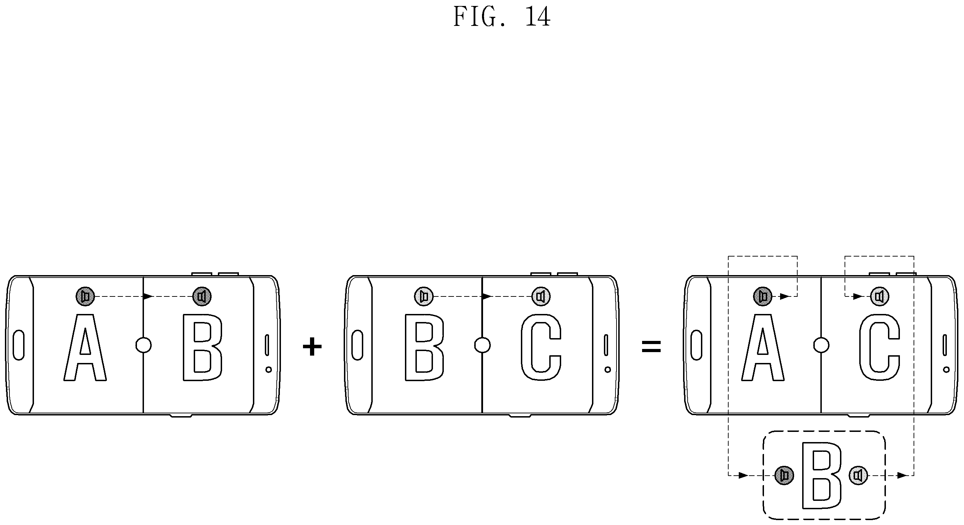

FIG. 14 is an illustration of a connection manner of serially-connected data pipelines according to an embodiment of the present disclosure.

Hereinafter, each step and its implementation are described.

(1) Establishing and configuring the serial data pipelines.

Referring to FIG. 14, in order to serially connect more than two applications, it is required to respectively establish a data pipeline between each two applications. The detailed process is similar as described above with reference to embodiment 1 and embodiment 2. In this embodiment, it is required to serially connect a camera application A, a food comment application B and a chat application C. As such, the system initially establishes a pipeline P1 between a photographing interface of the camera application A and a searching bar of the food comment application B according to the steps in embodiment 2 described above, and the data transmission confirmation manner is configured to sending without confirm. Then, the system establishes a pipeline P2 between the searching result interface of the food comment application B and the input box of the chat application C according to the method of embodiment 1 described above, and the content transmitted by the inputting end of the pipeline P2 is configured as sharing content, and the confirmation manner is sending without confirm.

In this embodiment, since the source data area of P1 is the photographing interface of the camera application, the method for establishing the data pipeline described above in Embodiment 2 should be adopted, but this does not indicate that the establishment of the serial data pipelines relies on the establishment of the data pipeline taking the realistic scenario as the source data area.

If the camera application in this embodiment is replaced by an album, the data pipeline P1 may be established via the steps in Embodiment 1 described above, and then P1 and the data pipeline P2 form the serial data pipelines. For example, one image in the album is determined as the source data area. The system may automatically recognize the data content may be dynamically transmitted in the image, display a selecting list for the transmission data content, and determine the data content must be dynamically transmitted based on a selection operation of the user.

(2) Dynamic data transmission

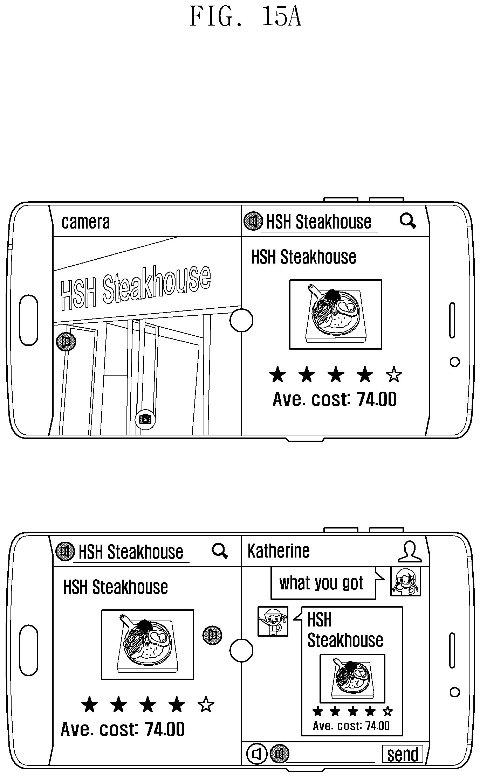

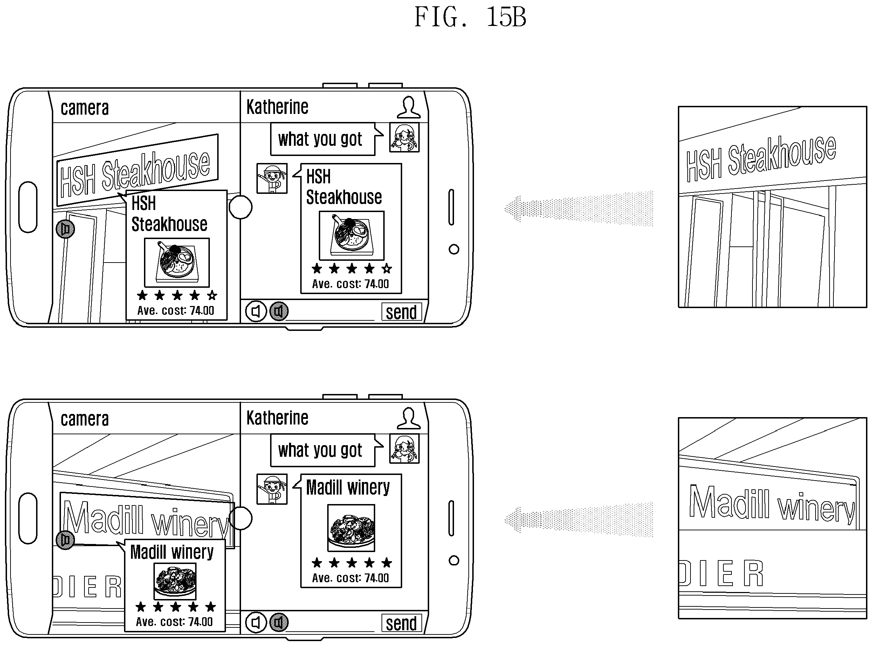

FIGs. 15A and 15B are illustrations of an establishment and usage manner of serially-connected data pipelines according to an embodiment of the present disclosure.

Referring to FIGs. 15A and 15B, if the user focuses the camera application on a signboard of restaurant 1, the system detects the name of the restaurant and configures the name of the restaurant as a preferable object, identifies the name by a frame of a particular color (e.g. green) and updates the source data area of pipeline P1. Since the user selects the sending without confirm manner, the system copies the name of the restaurant to the searching bar of the food comment application B. Then the food comment application B provides a searching result. For the pipeline P2, the new searching result indicates an update of the source data area. Since the pipeline P2 is configured to send the sharing content without confirm, the comment interface of the food comment application B immediately shares the content with the current contact of the chat application C.

If the user focuses the camera application on restaurant 2, the source data area of pipeline P1 is updated, which leads to a change of the search keyword of the food comment application B. A new search result is obtained and is automatically shared with the current contact.

Following the above manner, after the data pipelines P1 and P2 are established, once the user changes the photographing object object, the system automatically retrieves text from the photographed image and searches in application B. Once a search result is obtained, the search result is shared with the current contact in the chat application C.

The display manner of the destination data area in the source data area is as follows:
Furthermore, as described above in Embodiment 2, during the dynamic data transmission procedure, the destination data area may also affect the display manner of the source data area. According to embodiment 2 described above, if the destination data area is updated and the data comes from an interface showing a realistic scenario, the display manner of the realistic scenario may change accordingly. If the user has configured an embodiment of the present disclosure according to the method of Embodiment 2 described above to display a thumbnail (or other summarization information, e.g., text summarization, keywords, etc.) of the destination interface in the source data area, the system may display a screenshot thumbnail of the comment interface in the shooting interface, as shown in FIG. 15.

The thumbnail of the destination data area may be replaced by other manners supported by the destination application. For example, in this embodiment, one possible solution is to display at least one of a rating, a price, and recommended food of the restaurant.

If the source data area of the data pipeline P1 does not come from the realistic scenario, the summarization information of the destination data area may not be displayed in the source data area.

The switching manner of interfaces in the serially connected manner is as follows:
Furthermore, the data transmission via the serially connected data pipelines may further trigger a special interface switch manner. FIG. 14 shows an operating manner for serial data pipelines in a split-screen interface, two screen areas respectively show the interface of an input application A and an output application C. The two data pipelines are both configured to update without an interface switch. Under such a configuration, the data update and processing procedure of application B are implemented in the background and are invisible to the user. The user is merely required to operate the input interface of application A and check the finally output result of application C.

The display for the split-screen mode is not restricted to the manner shown in FIG. 14. For example, other display manners may include:

(a) The screen is split into two or more areas, and each area is used for fixedly displaying an interface of a respective serially connected application.

(b) The screen is split into two or more areas, one area is used for displaying the interface of the application which is switched to, and other areas are fixedly used for displaying an interface of a respective serially connected application.

The switching manner of a screen area in the split screen mode is similar to that in the full screen mode. The detailed procedure is described hereinafter.

In the full screen interface, if the user selects the camera application A as the currently displaying and operating interface, the data update and processing procedure of the food comment application B and the chat application C are both implemented in the background. If the user wants to check the intermediate data processing, the user may configure an appropriate interface switching manner. In the case where multiple applications are serially connected, if all source data areas are configured to switch after an update, the system will switch to a respective application where the data stream passes by in turn according to the sequence of A->B->C->..., and displays the updated result of the data. The time that the system stays at a respective application interface is configured so that the user is enabled to clearly see the update procedure of the data. If all of the destination data areas are configured to switch after an update, the system switches to application A directly after the update of all data areas is completed.

For this embodiment, in the full screen mode, if all of the data areas are configured to switch after an update, once the camera application A detects the name of the restaurant, the system automatically switches to the food comment application B to perform a search and displays the search result. After the search result is provided, the system switches to application C to share the result with the current contact. Thereafter, the system automatically switches back to the camera application A, waiting for the next operation of the user. In the whole procedure, some applications may require manual operation of the user.

For example, if the food comment application B provides a plurality of search results, the user may be required to manually select one search result. Through configuring the switch after update manner, the system may be required to stop the switching when requiring the user's manual operation, and then proceed with the following automatic processing after the user finishes the operation, e.g. selects one of the multiple search results provided by the food comment application B.

In the above examples, the user may want to make a further selection of the restaurants before sending, which may be implemented through changing the confirmation manner of the data pipeline. In this embodiment, the pipeline P1 may be configured to confirm before sending, or the pipeline P2 may be configured to confirm after receiving. The detailed configuration manner is as described above.

If there is an assistant displaying and operating interface such as an edge screen, the icon of an application in the series connection may be displayed in the assistant interface. If the system detects that the user clicks the icon, the main interface shows the corresponding application. In the assistant interface, the icon corresponding to the application displayed in the current main interface may be identified via a particular manner, e.g., highlighted, lighting, 3D effect, dynamic effect, etc.

Embodiment 4

In Embodiment 4, the data update procedure of multiple destination data areas is described in the case where the source data area has association relationships with the multiple destination data areas.

In some cases, the user may desire to connect the source data area containing multiple kinds of data content with multiple destination data areas. If the source data area is updated, each destination data area may automatically retrieve required content from the source data area to perform its data update.

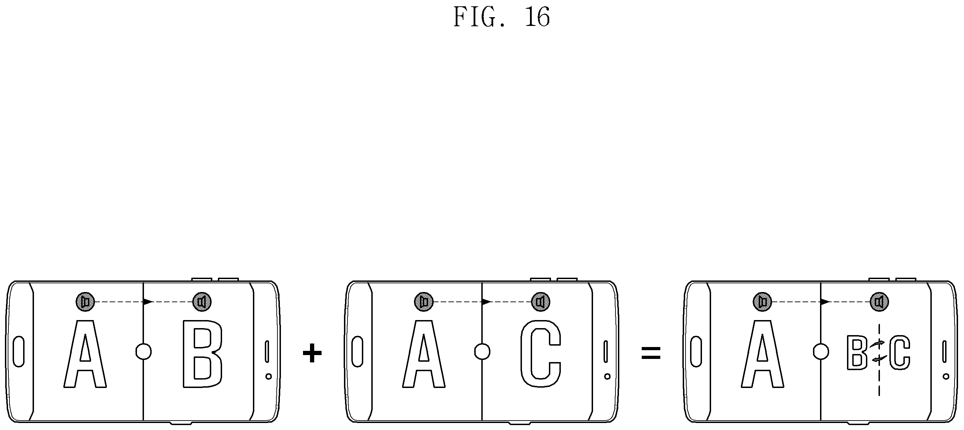

FIG. 16 is an illustration of a connection manner for one-to-multiple data pipeline according to an embodiment of the present disclosure. FIG. 16 shows the connection manner of the one-to-multiple data pipeline.

Referring to FIG. 16, a data pipeline is established between the source data area of application A and the destination data area of application B, and a data pipeline is established between the source data area of application A and the destination data are of application C.

For example, in order to send an important message to multiple contacts, the user hopes to send the message via all possible manners, e.g., short message, email, WeChat, etc. All information of the contacts may be obtained via photographing and recognizing a business card of a respective contact. Utilizing the one-to-multiple data pipeline, the user is able to accomplish this kind of task conveniently and effectively.

Hereinafter, the above task is used as an example to describe the establishment and usage of the one-to-multiple data pipeline.

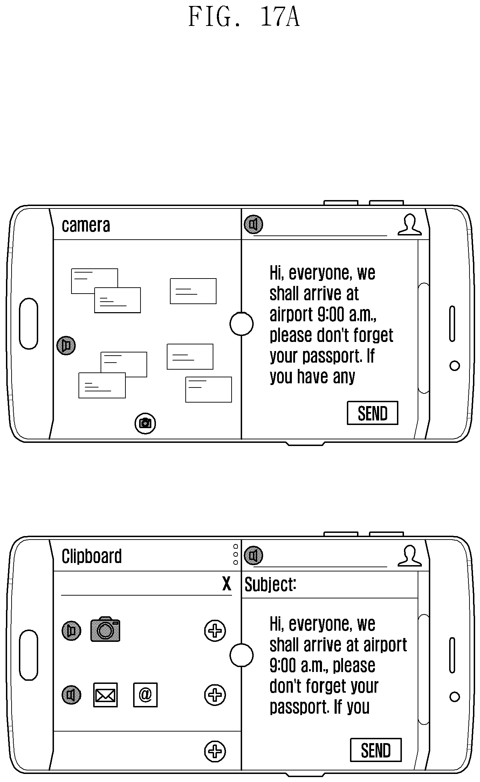

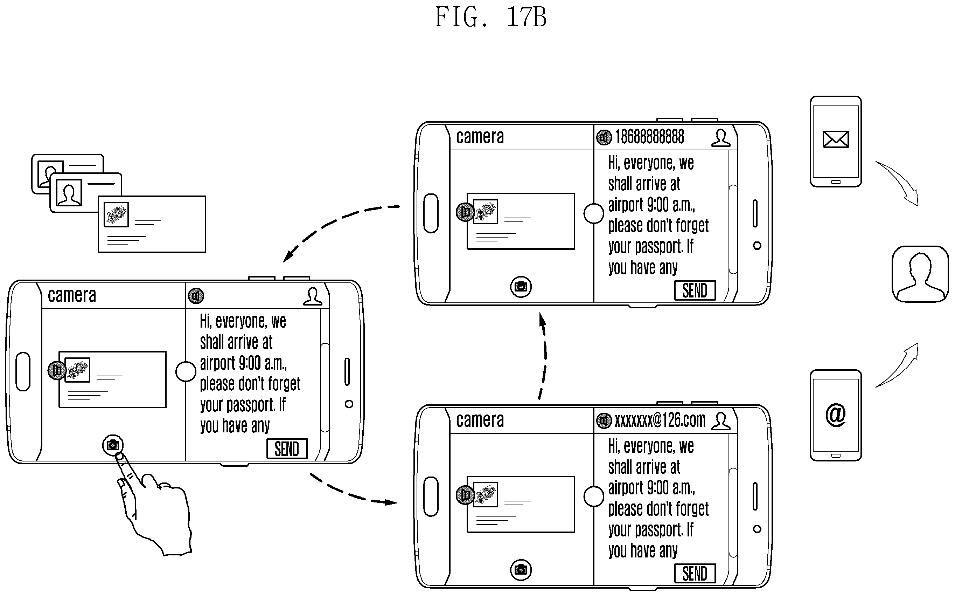

FIGs. 17A and 17B are illustrations of an establishment of one-to-multiple data pipelines and various message transmission manners according to an embodiment of the present disclosure.

Referring to FIGs. 17A and 17B, the establishment of the one-to-multiple data pipeline is basically similar to the one-to-one data pipeline in Embodiment 1 or Embodiment 2 described above, where the difference merely relies in the selection of the destination data area. In addition, if the data in the source data area is updated, the system is switched to a respective destination data area in turn to finish the data update. Hereinafter, a description is provided with reference to a detailed scenario.

(1) Establishment of the data pipeline.

In order to send the message via various manners, the user is required to use multiple applications such as a short message, email and WeChat. Hereinafter, merely a short message and email are utilized. The implementation is similar for situations where more applications are used. In this task, the user is mainly required to accomplish the association of two parts of data, one is the message content in different applications, and the other is the contact information of the contact in different applications.

The establishment of the one-to-multiple data pipeline between the camera application to the multiple communication applications is as follows:

For the contact information, the user is required to establish a data pipeline using the camera application as the source data area, and using the email receipt address bar and short message receipt cell phone number field as the destination data areas. The configuration of the source data area is similar as that described above in the foregoing embodiments. If the destination data areas are selected, it is required to add both the email application and the short message application to the destination application list via a dragging manner. After detecting that the user clicks to confirm the selection, the system automatically switches to the email application. The email address bar is selected as the destination data area, and the email website address is used as the transmission content. Thereafter, the system turns to the short message interface. Then, the user may click the cell phone number field as the destination data area, and select the cell phone number as the transmission content. The switching manner of the source data area may be configured to switch after an update. The switching manner of the destination data area may be configured to update without a switch.

The establishment of other data pipelines is as follows:

In order to realize the duplication of the message content, it is required to establish a data pipeline using the email content editing window as the source data area and using the short message editing window as the destination data area. If more than two communication applications are involved, it is also required to establish a one-to-multiple data pipeline to transmit the message content. The switching manner of the source data area and the destination data area are both configured to update without a switch.

If the user wants to be able to press one key to send the message via all communication manners, a data pipeline between the email sending button to the sending button of other communication applications must be established.

(2) Obtaining contact information of a contact.

For a one-to-multiple data pipeline, after a source data area is updated, the system automatically switches to a respective destination data area in turn and accomplishes the update according to the situation of the respective data area. The cell phone photographs the business card. The system automatically selects a text area containing a cellphone number and an email address as the preferable object according to the data type acceptable for the destination data area. Then, the system initially switches to the email application interface, and copies the email address to the email receipt field. Then, the system automatically switches to the short message interface, and copies the cellphone number to the cellphone number field.

If the photographed image contains multiple business cards, batch processing may be performed on the multiple business cards. The detailed processing is described above with respect to traversing all current objects at step (4) of Embodiment 2.

(3) Editing message content.

If the system detects that the user is editing message content in the email content window, the system sends the message content to other communication applications connected by the data pipeline to ensure the synchronous update of all content.

(4) Sending the message.

If a sending button of a respective communication application has been connected via the data pipeline, the system may automatically finish the sending of the message for all of the communication applications after detecting that the user clicks the sending button in the email application. If the sending button of the respective communication application has not been connected via the data pipeline, the user must manually switch to the respective communication application and click the sending button.

(5) Switching contacts.

The user photographs another business card using the cell phone and repeats the above operations. The system may implement the sending of the message to another contact.

Embodiment 5

In Embodiment 5, an update of content of a destination data area in one or more applications based on multiple source data areas of another application is described below.

In some cases, a user may be required to dynamically copy the content in multiple data areas of one application to one or more other applications.

For example, if the user wants to search products using two shopping applications at the same time, the keyword in the search bar, the selection condition and the search button action must be copied. If data pipelines are respectively established one by one, the operation may be complicated. Thus, there is a need for a method for rapidly establishing multiple data pipelines between two application scenarios.

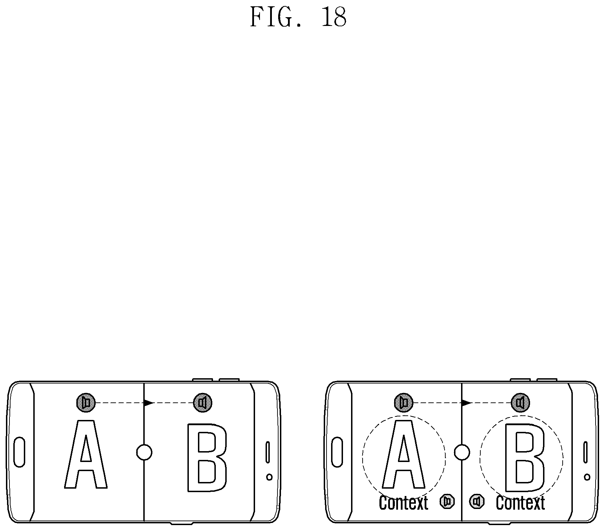

FIG. 18 is an illustration of an establishment of a data pipeline between application scenarios on two sides of a data pipeline according to an embodiment of the present disclosure.

Scenario 1 is establishing multiple data pipelines between two shopping applications.

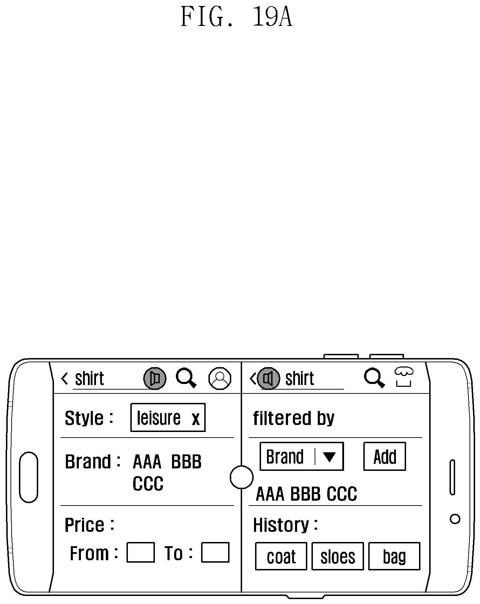

FIG. 19A is an illustration of an establishment of multiple data pipelines between two shopping applications according to an embodiment of the present disclosure.

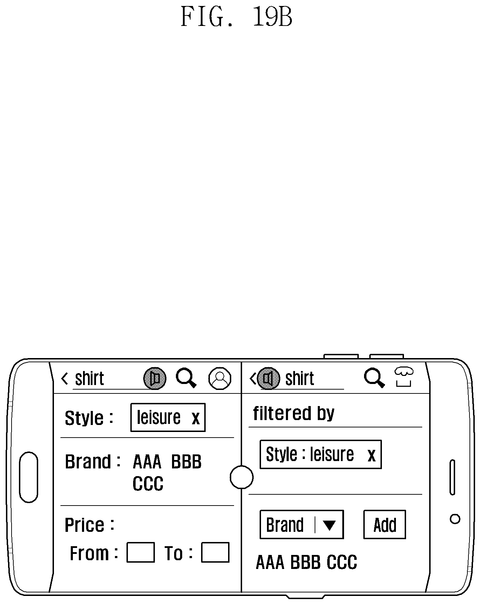

FIG. 19B is an illustration of an establishment of multiple data pipelines between two shopping applications according to an embodiment of the present disclosure.

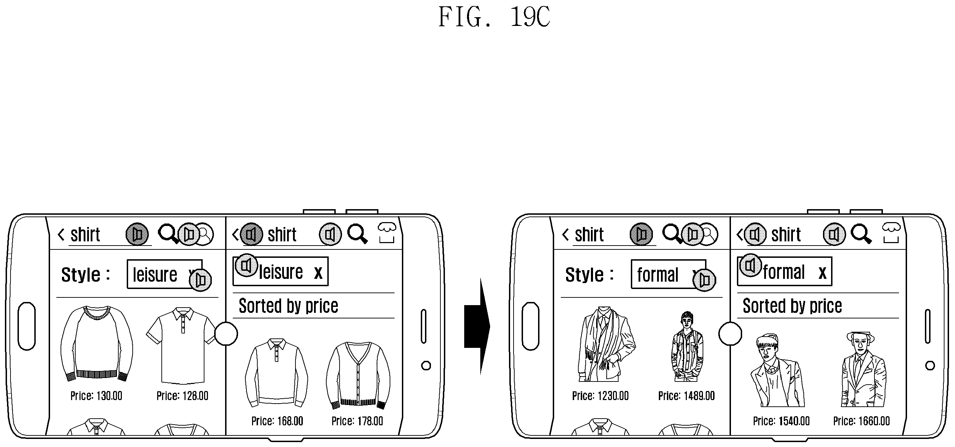

FIG. 19C is an illustration of an establishment of multiple data pipelines between two shopping applications according to an embodiment of the present disclosure.

(1) Establishing a pipeline between primary data areas.

The primary data areas refer to first data areas that a user wants to associate in the current scenario. In the present scenario, the primary data areas refer to searching bars of the two shopping applications. The user may also determine other data areas as the primary data areas. The following steps are implemented based on the user's selection. The user must manually establish the data pipeline between the primary data areas. The establishment and the processing of the system are similar to those described above in Embodiment 1.

(2) Establishing the pipeline between associated data areas.

Based on an operation of the user long pressing an icon of a source data area, an associated data area searching option is found in a clipboard pop-up menu. After the option is clicked, the system automatically searches for data areas meeting a condition in the current interface of the two applications. The condition may include: (a) associated with the primary data area; (b) there is a unique data area in another application corresponding to it, and a data pipeline can be established; and (c) in the source application, the effective data area must be the source data area. Accordingly, in the destination application, the effective data area must be the destination data area. Herein, the source application refers to the application where the primary source data area is located, and the destination application refers to the application where the primary destination data area is located. The association may be obtained directly via the association description information provided by the information, or may be obtained by semantic analysis of the data area label.

Based on the above condition, in the present scenario, the system can automatically deduce the selection condition contained by the two applications, and a data pipeline may be established between the button actions. The automatic deducing of the selection condition contained by the two applications may be based on various kinds of information, such as the data type and content, the application scenario, and a data association. For example, the system may implement the association of the data areas through matching the keywords in the data area label. In the present scenario, popular keywords may include: price, price range, brand, style, gender, etc., and may further include brand name, style name, man dress, women dress, etc. In addition, the data type may also be used for deducing the association in this scenario, e.g., price, number, size are all data areas that can receive only figure input. It is possible to reduce the scope for keyword matching via data type matching.

According to the deduced result, in the interfaces of the two applications, the system respectively identifies all candidate source data areas and destination data areas, and displays them in semi-transparent state, denoting that these data areas are in the candidate state. At the same time, the data areas corresponding to different data pipelines are differentiated via different colors, where FIG. 19B shows the above procedure.

After the user selects an icon of the source data area or the destination data area for which the association is to be established, the system changes the source data area and the destination data area to an opaque state at the same time, denoting that they are selected. After the user clicks to confirm the selection, the system finishes the establishment of the data pipeline between the associated data areas.

Considering that, in some cases, the association between the data areas deduced by the system is completely in line with the expectation of the user, and in order to further save operations, the system may provide a "select all" option on the interface. Thus, the user is enabled to directly select all of the candidate data areas, without the need of clicking them one by one. Accordingly, a "select none" option may also be provided. After this option is clicked, the selection of all data areas is cancelled.

(3) Synchronous update of multiple data areas.

Referring to FIG. 19C, the user inputs a keyword in the shopping application A acting as a source application and clicks to search. The system changes the keyword in application B accordingly and provides a search result. If the user changes the filtering condition in application A, the filtering condition in application B is also changed by the system accordingly. Through this manner, the user is able to perform a cross-application synchronization operation conveniently.

Scenario 2 is the establishment of multiple data pipelines between associated data areas when a displaying interface of a practical scenario acts as the source data area is described below.

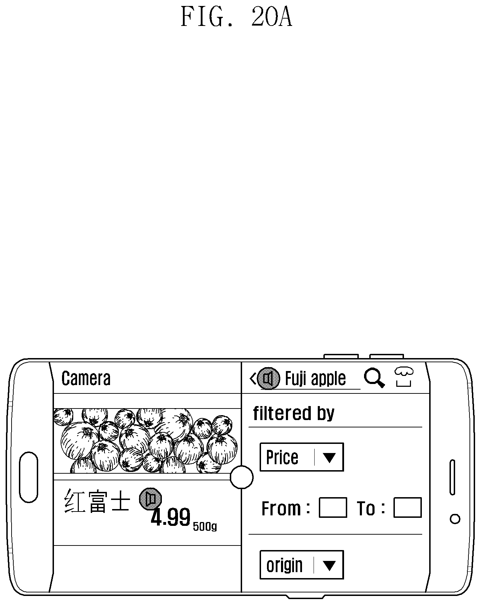

FIG. 20A is an illustration of an establishment of multiple data pipelines between a realistic scenario and a shopping application according to an embodiment of the present disclosure.

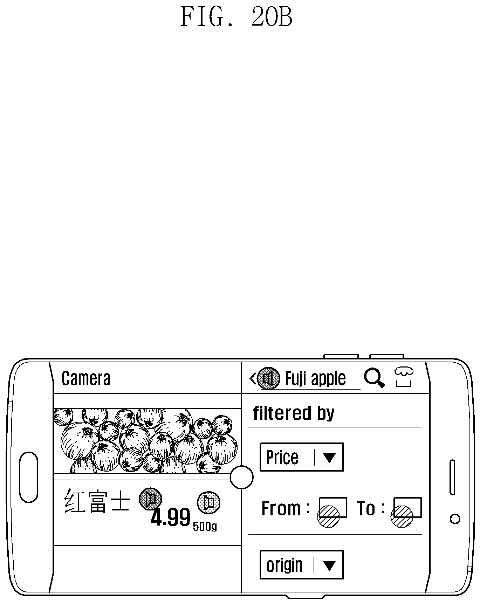

FIG. 20B is an illustration of an establishment of multiple data pipelines between a realistic scenario and a shopping application according to an embodiment of the present disclosure.

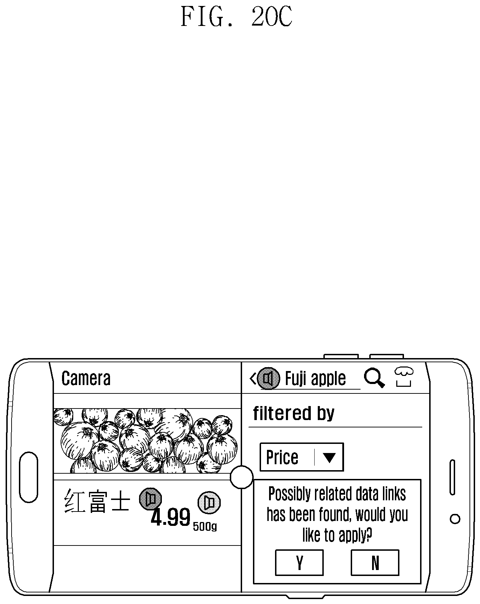

FIG. 20C is an illustration of an establishment of multiple data pipelines between a realistic scenario and a shopping application according to an embodiment of the present disclosure.

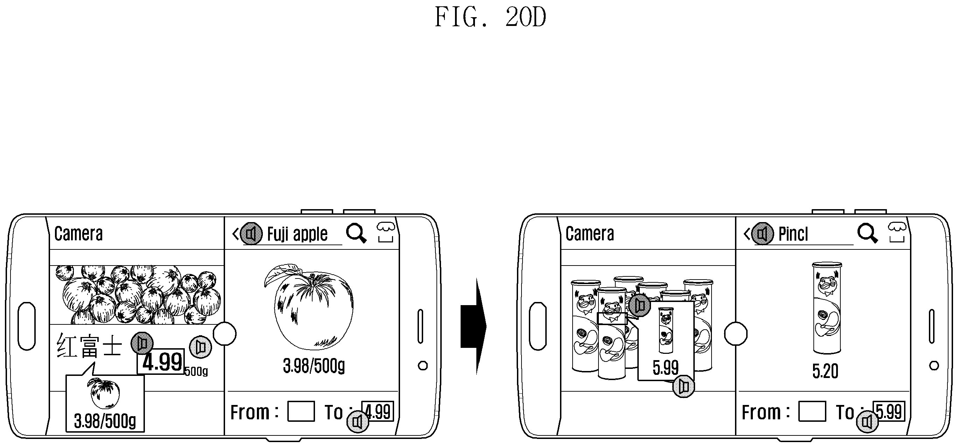

FIG. 20D is an illustration of an establishment of multiple data pipelines between a realistic scenario and a shopping application according to an embodiment of the present disclosure.

In this scenario, a user is shopping in a supermarket. When seeing a certain product, the user desires to search in a shopping application for the same product with a lower price according to a photograph of the product name and the price.

(1) Establishing a pipeline between primary data areas.

According to the steps of embodiment 2 described above, a pipeline from a primary object in the realistic or practical scenario to a destination data area of a particular application may be established. In this embodiment, the primary object is the product name photographed in the practical scenario. If there are multiple recognizable objects in the scenario, according to the description of embodiment 2, the system may select a product name as the primary object according to a click operation of the user to the identifying frame of the product name. Then, the searching bar of the shopping application is configured as the destination data area, the result of this step is as shown in FIG. 20A.

(2) Establishing a pipeline between associated data areas.

Similar to the above scenario, when detecting that the user selects the option of searching associated data areas, the system respectively detects effective objects in the practical scenario and data areas in the destination application, and analyzes the association between them. As shown in FIG. 20B, in this embodiment, according to the data type, the system is capable of determining that there is an association between the figure object in the scenario and the price range of the destination application. Since both the highest price input box and the lowest price input box are associated with the figure, a destination data area icon in a color matching with the figure object is displayed beside each of the two input boxes at the same time. Through detecting a selection operation of the user, the system can determine between which data areas the user wants to establish the association, and displays the selected and unselected data areas differently. In this embodiment, the user selects the real figure object at the source data area side, and selects the highest price input box at the destination data area side but does not select the lowest price input box. Therefore, the icons for the figure object and the highest price input box in the interface are both in normal display status, whereas the lowest price input box is in a semi-transparent display status.

After detecting that the user clicks to confirm the selection, the system finishes the establishment of the data pipeline between the selected associated data areas. As shown in FIG. 20C, in this embodiment, the figure object is associated with the highest price input box via the data pipeline. It should be noted that, in the practical scenario, since the display manner for the effective object is instable, in the case where multiple data pipelines are established, the system actually establishes a data pipeline from a certain type of objects to a particular destination data area. For example, in this embodiment, the system respectively establishes the data pipeline from the product name to the searching bar and the data pipeline from the figure object to the highest price input box. If the system cannot definitively determine the associated object according to the association analyzing method, the system may require the user to further provide a configuration for the selection condition for the association object, or provide a selection and confirmation for the deduced result. This procedure may occur during the establishment of the data pipeline, or during the data transmission. The detailed process is described above in Embodiment 1.

(3) Synchronous update of multiple data areas.

After the data pipeline is established, once the system detects that the source data area is updated, the system synchronously updates the destination data area. The data update of different data pipelines may be independent or synchronous. The synchronous update may include: (a) if the primary source data area is updated, detecting all of the other associated source data area(s), and transmitting the content of the updated source data area(s) to the destination data area(s); (b) if it is detected that any source data area is updated, detect all of the other associated source data area(s), and transmit the content of the updated source data area(s) to the destination data area(s); (c) performing the data transmission only if all of the data areas are updated; (d) other synchronizing methods which can show the data association, etc.

In this scenario, as shown in FIG. 20D, if the name and price of product A are detected, the system automatically copies the name of the product to the searching bar, and copies the price to the highest price input box. As such, the user may conveniently search in the shopping application for the same but cheaper product. If the photographed object is switched to product B, the product name and price limit are updated automatically. If the user's confirmation is detected, the system updates the search result.

Embodiment 6

In Embodiment 6, a procedure of updating the content of a destination data area of a device based on the content of a source data area of another device is described.

In some cases, a user may be required to dynamically transmit the data in one device to another device. This function may be implemented through establishing a cross-device data pipeline.

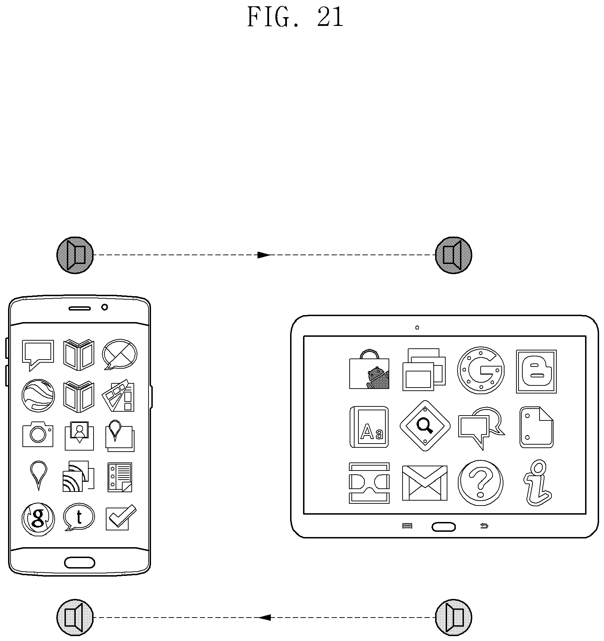

FIG. 21 is an illustration of a cross-device transmission of a dynamic association relationship according to an embodiment of the present disclosure.

Through an establishment of a data pipeline from a cellphone to a tablet computer, it is possible to dynamically transmit data in an application of the cell phone, e.g., an image photographed by a camera of the cellphone or text, an image, a video and audio in other applications, to an application in the tablet computer, e.g. a chat application in the tablet computer, and vice versa.

The detailed operation includes the following.

(1) Enabling a cross-device sharing function.

In order to implement cross-device data transmission, a data connection between devices must be established first.

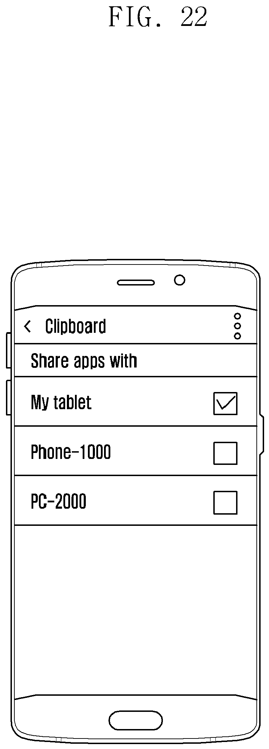

FIG. 22 is an illustration of a configuration interface for a sharing function according to an embodiment of the present disclosure.

Referring to FIG. 22, if a user opens a clipboard configuration interface in a source device A for transmitting data, e.g., a cellphone in this embodiment, after the user clicks an option "share with," the system displays other devices having data connections with the current device. Herein, the data connection includes connections in all communication manners supported by the device, e.g., WiFi, Bluetooth, infrared, near field communication (NFC), light fidelity (lifi), etc. Then, according to the name of the destination device B selected by the user for the data transmission, e.g. the tablet in this embodiment, the system assigns to the device B a privilege for accessing the data pipeline sharing service of the device A, and obtains the privilege for accessing the data pipeline sharing service of device B at the same time.

The above describes a configuration manner based on bi-directional data connection. Similarly, it is possible to implement sharing based on a unidirectional communication. That is, after the user selects device B, the system in device A assigns an access privilege to device B, but device A does not obtain the privilege for accessing device B. It is required to perform a similar configuration on device B to enable device A to obtain the privilege.

The above configuration is a sharing data pipeline service request transmitted from device A to device B. In this situation, after receiving the request, the system of device B asks the user to accept the request. If the user accepts the request, the connection is established. If the user refuses the request, establishment of the connection fails. Another response manner includes: after receiving the request, device B requesting device A to provide a credential to authenticate its identity, or the system of device A requests the user to input the credential when transmitting the request. If the verification of the credential of device A succeeds, the connection is established. Otherwise, connection establishment fails.

Besides the above, there may be other manners for establishing a data connection. In general, the establishment manner for a connection for the sharing data pipeline is similar to various establishment manners of a connection between devices. The implementations of them are all applicable and are not repeated here.

In some cases, the user may desire to merely share some applications in device B with device A. The system provides a sharing privilege list. The user may configure which application that may be shared through accessing the list and selects applications. After confirmation, the system modifies the access privilege accordingly. In addition, the user may also modify a list of devices capable of accessing a shared application, so as to modify the access privilege. These functions may be implemented by a conventional file sharing service and are not repeated here.

(2) Establishing a data pipeline.

After the data connection between device A and device B is established, it is possible to access device B from device A and establish data areas between an application of device A and an application of device B. In this embodiment, device A is a cellphone and device B is a tablet computer. The detailed steps are similar to those in the above described embodiments. The difference relies in that, in the step of selecting the destination application, the system displays both the applications in local device A and in the sharing device B. However, the applications in the local device are displayed differently from the applications shared by other devices. Thus, it is possible to accurately differentiate the same application on different devices.

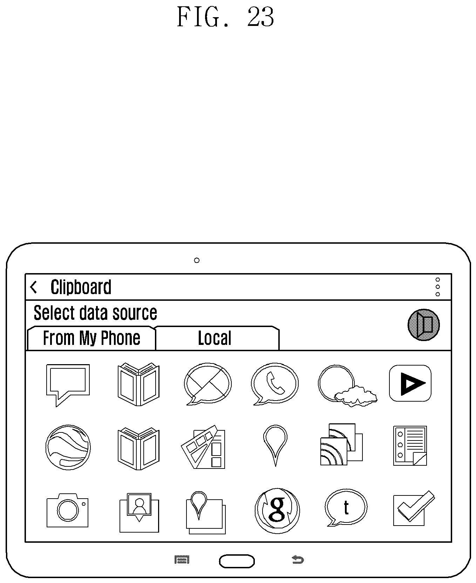

FIG. 23 is an illustration of an application selection interface for a cross-device data pipeline according to an embodiment of the present disclosure. Different devices correspond to different tabs. If the user clicks a tab, the system displays an available application list of the device. If the system has established a sharing relationship with multiple devices, it is possible to check different lists for available applications in a respective device.

(3) Dynamic data transmission.

The data transmission and update manner for the cross-device data pipeline is similar to the dynamic transmission and data update manner in the same device.

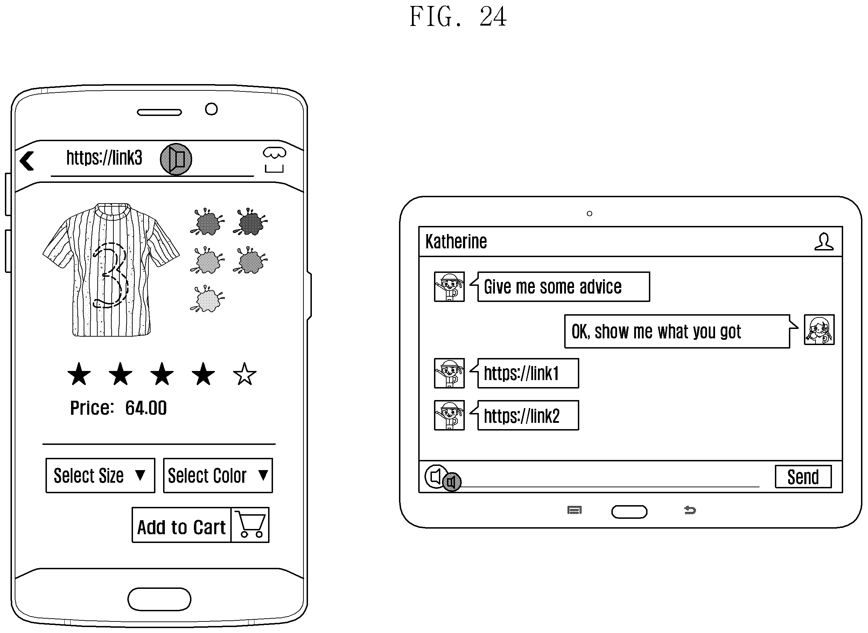

FIG. 24 is an illustration of dynamic data transmission from a cellphone to a tablet computer according to an embodiment of the present disclosure.

Referring to FIG. 24, after a cross-device data pipeline from the shopping application of the cellphone to the chat application of the tablet computer is established, except that the transmitting and receiving interfaces are respectively displayed in the cellphone and the tablet computer, the usage manner is completely the same as described above in Embodiment 1. However, as to the switching of the application interface after data is updated, interface adaptation and conversion may be required during the switching between the source data area and the destination data area due to different display manners of different devices. For example, if the application of the cellphone provides the source data area and the application in the tablet computer provides the destination data area, if it is switched to the destination data area after data is updated in the cellphone, the destination data area application interface in the tablet computer is displayed on the cellphone with a reduced size, and the aspect ratio of the displayed interface may be adjusted according to the screen of the cellphone. As to an interface that cannot be adapted and converted, e.g. some tablet computer application interfaces cannot be converted into smart watch interfaces, the function of switch after update is not supported.

(4) Impact of the data connection manner.

Furthermore, change of the data connection manners between the devices may also impact the transmission content. For example, if the devices are connected merely via Bluetooth, the transmission speed is low. If transmission content is selected, the system determines in default that the transmission content does not include an image but merely includes text, a website link, etc. If the devices are connected via both WiFi and Bluetooth, the transmission speed is high. The system may recommend transmitting all contents including an image. If the data connection manner between the devices is changed after the configuration for the transmission content is finished, the system automatically adjusts the transmission content and provides a prompt to the user.

(5) Reuse of the cross-device data pipeline.

Furthermore, the cross-device data pipeline may be saved and reused similarly as an application. If it is detected that the user clicks an icon denoting a cross-device data pipeline, the system initially attempts to establish a connection between the devices, which is similar to the user manually enabling the cross-device sharing function. The difference is that the destination device is determined by the configuration of the saved data pipeline and does not need to be selected by the user. If the connection is successfully established, the system further tries to establish the data pipeline between the data areas of the devices according to a record. If there is an error in any intermediate step, the system may provide an error prompt, informing the user that establishment of the data pipeline fails.

Embodiment 7

In Embodiment 7, the implementation procedure for sharing an existing dynamic association relationship in one device with another device is described below.
In some cases, a user may want to share a dynamic association relationship (e.g. a data pipeline) established in one device with another device.

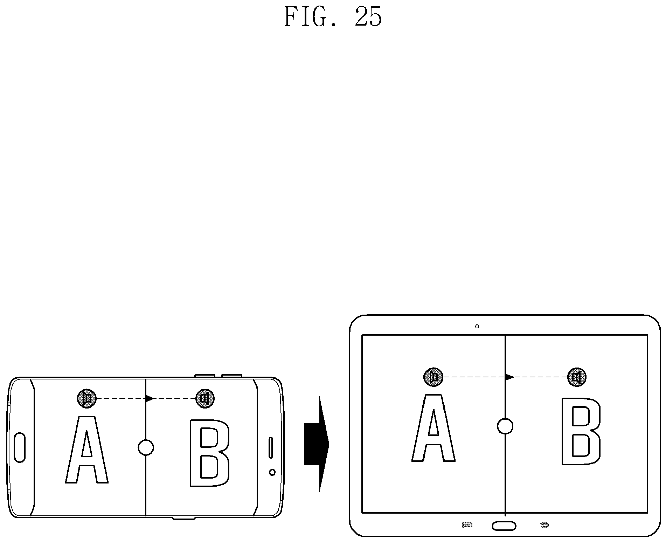

FIG. 25 is an illustration of sharing a data pipeline according to an embodiment of the present disclosure.
Referring to FIG. 25, an existing data pipeline in a cellphone may be shared with a tablet computer.
For example, if the cellphone's battery is about to run out, the user may hope to transit the data pipeline established in the cellphone to the tablet computer for subsequent use. This may be implemented via a data pipeline sharing function.
The method described herein is applicable for not only the dynamic data transmission determining the data pipeline as a medium, but also the sharing of static information established in one device with another device.
The detailed operation includes the following.

(1) Enable a cross-device sharing function.

This step is similar to the corresponding step in Embodiment 6 described above.

(2) Share the data pipeline.

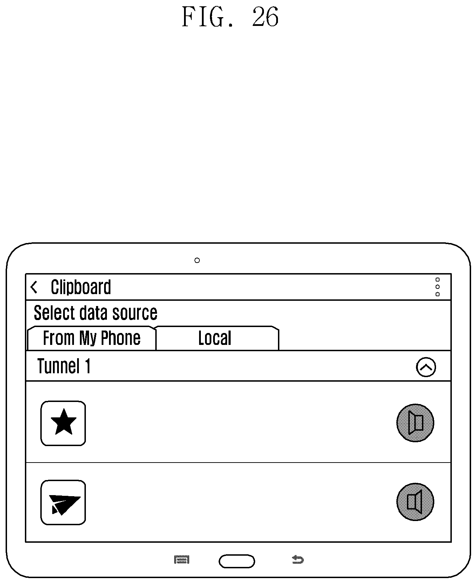

After the data connection between device A and device B is established, the system enables the user to check the data pipe shared by device A in device B.
One possible configuration interface is as shown in FIG. 26.
FIG. 26 is an illustration of a data pipeline list interface according to an embodiment of the present disclosure.
Referring to FIG. 26, the system respectively displays a list of data pipelines shared by a respective device. Based on a click operation to a tab of respective device, it is possible to check the data pipeline which is established in that device and which has been shared with the present device. Based on the click operation to a particular data pipeline, the list may be expanded to display detailed information about the data pipeline, e.g., a source application, a source data area, a destination application, a destination data area, etc. After a local list is selected, all data pipelines available for sharing in the present device may be seen. For example, the user selects a particular data pipeline in a local sharing list of device A. Then, this data pipeline may be seen in the data pipeline list of device A displayed in device B. If the selection of this data pipeline is cancelled in device A, this data pipeline becomes invisible in device B.
(3) The data pipeline is copied from another device to a device receiving the sharing. The data pipeline sharing option is selected. In the data pipeline list, the device where the data pipeline to be imported is selected. Herein, a description is provided assuming that the data pipeline sharing option is in the clipboard menu. If the data pipeline in this device is applicable for the present device, the data pipeline is displayed as selectable. If the data pipeline contains an application not installed in the present device or has issues such as application version incompatibility, the data pipeline is displayed as non-selectable. In some cases, the user must configure, at device B for receiving the sharing, a similar application scenario as device A according to the data pipeline. For this, if the data pipeline contains an application which is not installed in device B or must be updated, the system must prompt the user as to which application(s) must be installed or updated.

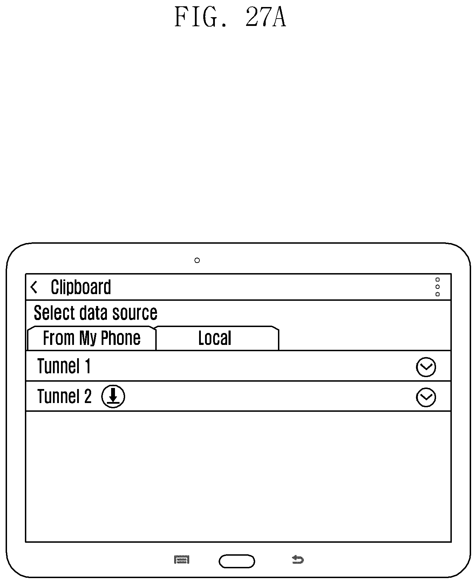

FIG. 27A is an illustration of downloading of a missing application during transition of a data pipeline according to an embodiment of the present disclosure.

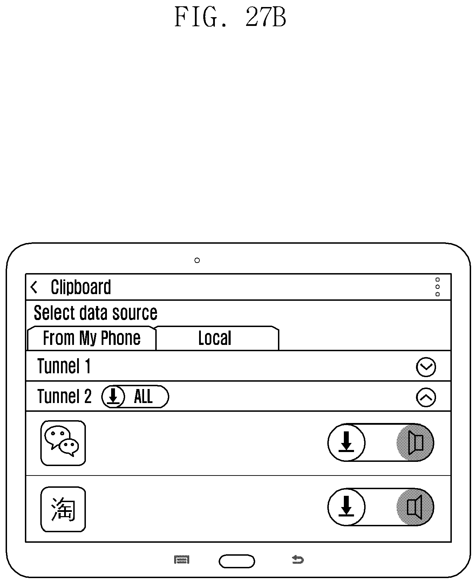

FIG. 27B is an illustration of downloading a missing application during transition of a data pipeline according to an embodiment of the present disclosure.

Referring to FIGs. 27A and 27B, the system displays an icon representing prompt information beside the data pipeline with incomplete installation of associated applications. If it is detected that the user clicks the icon, the system displays a menu for the missing applications. If it is detected that the user selects an application in the menu and confirms the selection, the system automatically downloads and installs the application. In addition, if it is detected that the user clicks "download all," the system automatically downloads and installs all of the missing applications. After the installation, the system changes the status of the corresponding data pipeline to be valid and adjusts the display.

If the system detects that the user selects the data pipeline and confirms the selection, the data pipeline is shown in the current device again.

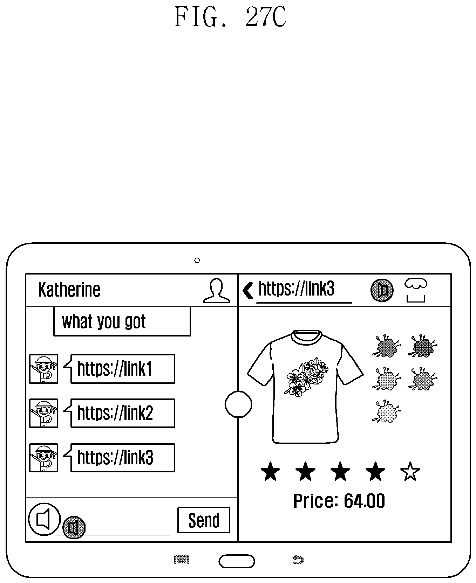

FIG. 27C is an illustration of re-showing a data pipeline in a cellphone according to an embodiment of the present disclosure.

Referring to FIG. 27C, after the data pipeline established in the cellphone according to embodiment 1 is shared with the tablet computer, through clicking the data pipeline, a dynamic data transmission from a local shopping application to a local chat application is established immediately in the tablet computer.

For facilitating the sharing of the data pipeline in emergency situations, the system may also provide a manner for rapidly sharing all current data pipelines. If it is detected that the user selects in device A to share all data pipelines with device B, the system may transmit a data pipeline configuration request to device B. After receiving the request, the system of device B may directly accept the request or accept after verifying a credential, or may request device B to provide a credential and receive the data pipelines after receiving the credential and the verification succeeds. After the reception is completed, the system in device B re-establishes the data pipelines according to the application configuration situation.

In view of the above, compared with the conventional cross-application data transmission method, the solution of the present disclosure is more convenient, flexible and applicable for more scenarios. Through various data dynamic association methods provided by the present disclosure, the user is able to dynamically combine multiple applications into one powerfully combined application rapidly according to his/her requirement, so as to dramatically increase work efficiency in a multi-task and complex task scenario, and make the intelligent device become a more intelligent and effective tool.

Based on the above description, embodiments of the present disclosure further provide a content determining apparatus and an information sharing apparatus for an intelligent device.

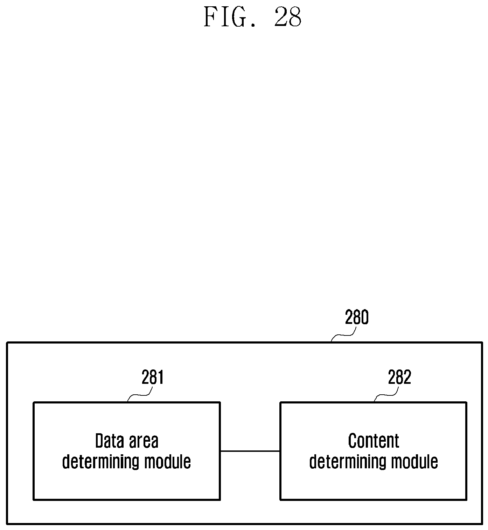

FIG. 28 is a schematic diagram of a content determining apparatus for an intelligent device according to an embodiment of the present disclosure.

Referring to FIG. 28, the apparatus 280 includes:

a data area determining module or device 281, adapted to determine a source data area and a destination data area having a dynamic association relationship with the source data area; and

a content determining module or device 282, adapted to determine content in the destination data area based on content in the source data area.

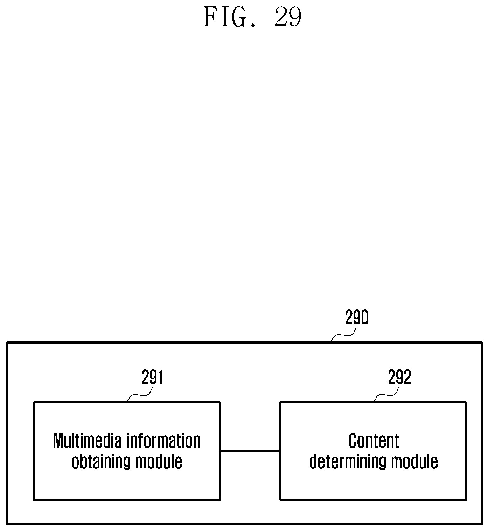

FIG. 29 is a schematic diagram of a content determining apparatus for an intelligent device according to an embodiment of the present disclosure.

Referring to FIG. 29, the apparatus 290 includes:

a multimedia information obtaining module 291, adapted to determine a source data area among multiple pieces of information collected in real time by a multimedia collecting apparatus, and determine a destination data area having an association relationship with the source data area; and

a content determining module 292, adapted to determine content of the destination data area based on content of the source data area.

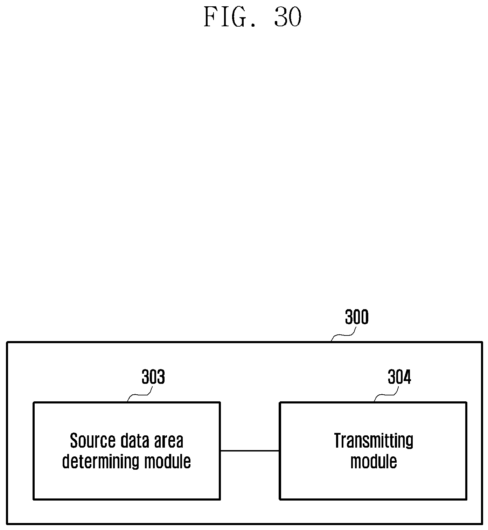

FIG. 30 is a schematic diagram of a content determining apparatus for an intelligent device according to an embodiment of the present disclosure.

Referring to FIG. 30, the apparatus 300 includes:

a source data area determining module 303, adapted to determine a source data area in the intelligent device, wherein the source data area has a dynamic association relationship with a destination data area in another intelligent device; and

a transmitting module 304, adapted to transmit content in the source data area to the another intelligent device, wherein the another intelligent device determines content in the destination data area according to the content in the source data area.

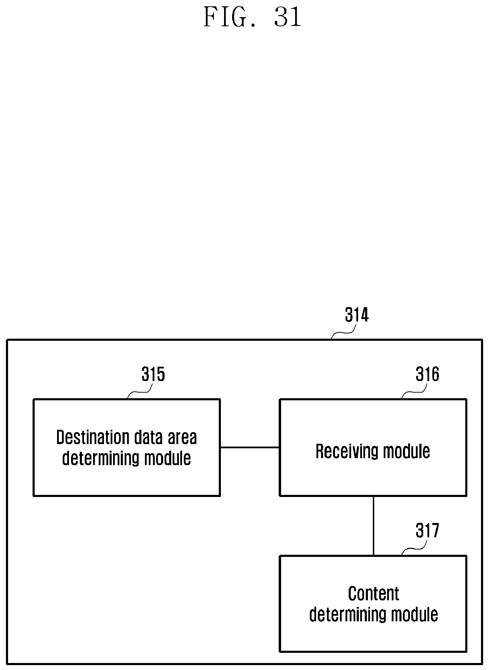

FIG. 31 is a schematic diagram of a content determining apparatus for an intelligent device according to an embodiment of the present disclosure.

Referring to FIG. 31, the apparatus 314 includes:

a destination data area determining module 315, adapted to determine a destination data area in the intelligent device, wherein the destination data area has a dynamic association relationship with a source data area in another intelligent device;

a receiving module 316, adapted to receive content in the source data area transmitted by the other intelligent device; and

a content determining module 317, adapted to determine content in the destination data area according to content in the source data area.

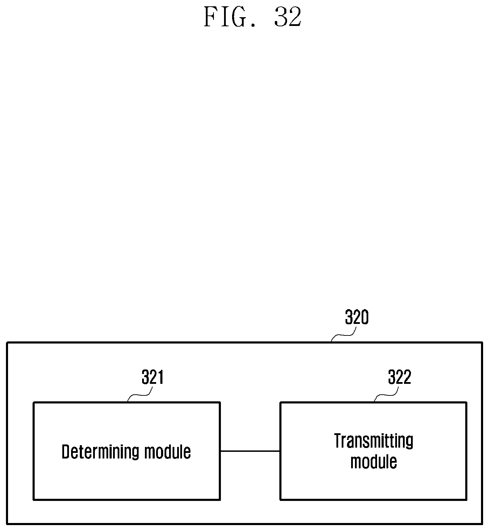

FIG. 32 is a schematic of an information sharing apparatus for an intelligent device according to an embodiment of the present disclosure.
Referring to FIG. 32, the apparatus 320 includes:

a determining module 321, adapted to determine sharing information to be shared with another intelligent device, wherein the sharing information includes an association relationship between a source data area and a destination data area; and

a transmitting module 322, adapted to transmit the sharing information to the another intelligent device.

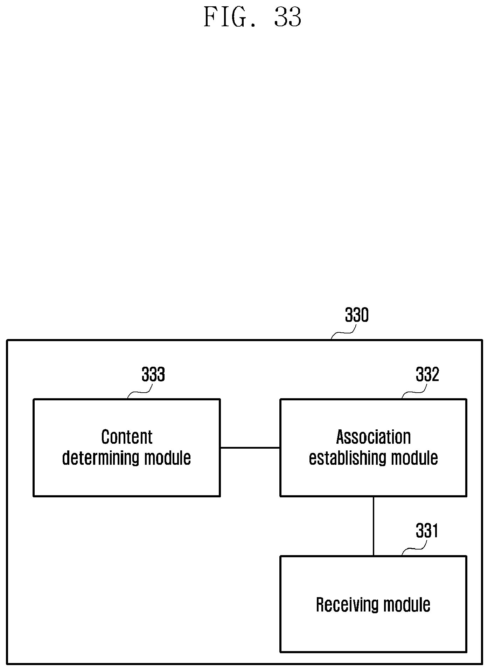

FIG. 33 is a schematic diagram of an information sharing apparatus for an intelligent device according to an embodiment of the present disclosure.
Referring to FIG. 33, the apparatus 330 includes:

a receiving module 331, adapted to receive sharing information transmitted by another intelligent device, wherein the sharing information includes an association relationship between a source data area and a destination data area;

an association establishing module 332, adapted to establish an association between the source data area and the destination data area according to the received sharing information; and

a content determining module 333, adapted to determine content in the destination data area according to content in the source data area.

In view of the above, embodiments of the present disclosure provide a method for dynamically establishing an association relationship between data areas, including selecting data areas and the content to be transmitted according to user intention, application scenario, device status and other factors, and identifying the dynamic association.
Furthermore, embodiments of the present disclosure also provide a method for selecting the data to be transmitted after the association is established. According to various selection methods selected by the user, during the transmission, the system automatically selects according to data content and form and allows the user to confirm the selection for the data to be transmitted via various manners.
Embodiments of the present disclosure further provide a display method for the dynamic associated data areas. The display of the data area may be adapted for various interface modes, e.g. full-screen, split-screen, etc. In addition, automatic switching between relevant application interfaces is implemented according to a user's requirement.
Embodiments of the present disclosure also provide a method for associating a data area to a practical scenario dynamically. If there is a detectable or recognizable object in a practical scenario, a system provides a user with potential applications available for establishing a dynamic association and data areas thereof. If the user selects a data area, the system selectively transmits object information in the practical scenario to the data area according to a requirement and a restriction of the data area for the data content and form. As such, a change of the data area may also be reflected in the display interface of the practical scenario. The association between the data area and the practical scenario may be recorded. If the same object subsequently appears , the dynamic association relationship may be established rapidly.
Embodiments of the present disclosure further provide a method for dynamically associating data serially. An embodiment of the present disclosure supports an association of more than two data areas in series, and may implement multi-layer processing of dynamic data.
Embodiments of the present disclosure further provide a one-to-multiple dynamic data association method, supporting one-to-multiple dynamic data association between one source data area and multiple destination data areas. If a source data area is updated, multiple destination data areas are automatically updated according to their respective configurations.
Embodiments of the present disclosure also provide a dynamic association method for data area context. After a dynamic association is established between two primary data areas, data areas that may be dynamically associated with the primary data areas may be found according to an analysis of the established dynamic association and data area application scenario and may be provided to the user, so as to assist the user's operation. A dynamic association relationship between multiple data areas under the same application scenario may be rapidly established according to the user's operation or may be established automatically.
Embodiments of the present disclosure also provide a cross-device data area dynamic association method and a cross-device dynamic association information sharing method. The dynamic associated data areas may come from different devices. The dynamic association information in one device may be shared with another device to establish a dynamic association relationship between the same data areas in the other device.

Embodiments of the present disclosure also provide a non-transitory computer-readable recording medium including a program for executing a content determining method for an intelligent device. The method includes determining a source data area and, in a destination data area determining device, a destination data area having a dynamic association relationship with the source data area; and determining content in the destination data area according to content in the source data area.

The foregoing descriptions are only embodiments of the present disclosure and are not intended to limit the scope thereof. Changes and modifications may be made by those skilled in the art without departing from the scope of the present disclosure as defined by the appended claims and their equivalents.

In addition to the foregoing explanations, the following enumerated Aspects 1 to 15 are also relevant for the present disclosure as part of the specification which must not be confused with the appended claims (that follow after the specification):

[Aspect 1] A content determining method for an intelligent device, comprising: determining a source data area and a destination data area having a dynamic association relationship with the source data area; and determining content in the destination data area according to content in the source data area.

[Aspect 2] The method of Aspect 1, wherein determining content in the destination data area according to content in the source data area comprises: filtering the content in the source data area, and determining the content in the destination data area based on content filtered out.

[Aspect 3] The method of Aspect 2, wherein filtering the content in the source data area is comprised of filtering the content in the source data area based on at least one of: application relevant information; environmental information; a user's personal information; the user's operation history; device status information; a data type supported by the destination data area; a preconfigured condition; and the user's instruction.

[Aspect 4] The method of Aspect 1, wherein the source data area is determined based on at least one of: a data area bearing selected content; data content in an interface; application relevant information; environmental information; a user's personal information; a data type supported by the destination data area; the user's operation history; the user's instruction; a preconfigured condition; and an obtained dynamic association relationship; the destination data area is determined based on at least one of: a destination area for selected content; data content in the interface, the application relevant information; the environmental information; the user's personal information; the data type supported by the source data area; the user's operation history; the user's instruction; the preconfigured condition; and the obtained dynamic association relationship.

[Aspect 5] The method of Aspect 1, wherein determining content in the destination data area comprises: determining the content in the destination data area based on the content in the source data area and/or content associated with the content in the source data area.

[Aspect 6] The method of Aspect 1, wherein if there is a plurality of source data areas, determining content in the destination data area comprises: determining the content in the destination data area corresponding to a respective source data area at a same time according to content in the plurality of source data areas; or according to a predefined order, respectively determining the content in the destination data area corresponding to the respective source data area according to the content of the plurality of the source data areas in turn.

[Aspect 7] The method of Aspect 1, further comprising: displaying the content in the source data area and/or the content in the destination data area.

[Aspect 8] The method of Aspect 1, wherein the destination data area is dynamically associated with another data area, wherein the destination data area is a source data area for the another data area, and further comprising determining content of the another data area based on the content of the destination data area.

[Aspect 9] The method of Aspect 1, further comprising at least one of: if there is a plurality of destination data areas; determining content of the plurality of destination data areas based on content of at least one of the plurality of destination data area; and if there is a plurality of destination data areas, determining the content of each of the plurality of destination data areas based on the content of the source data area.

[Aspect 10] The method of Aspect 1, further comprising: determining another source data area associated with the source data area; determining another destination data area associated with the destination data area according to the another source data area; and determining content of the another destination data area based on content of the another source data area.

[Aspect 11] The method of Aspect 10, wherein the another source data area associated with the source data area is determined based on at least one of: data content in a data area; data type of the data area; application relevant information; environmental information; association information; and a user's instruction.

[Aspect 12] The method of Aspect 1, further comprising: determining assistant information for the content of the source data area based on the destination data area; and displaying the assistant information on an interface of the content of the source data area.

[Aspect 13] The method of Aspect 1, wherein determining the source data area comprises: determining the source data area from multimedia information collected in real time by an information collecting apparatus.

[Aspect 14] A content determining apparatus for an intelligent device, comprising: a data area determining device, adapted to determine a source data area and a destination data area having a dynamic association relationship with the source data area; and a content determining device, adapted to determine content of the destination data area based on content of the source data area.

[Aspect 15] A non-transitory computer-readable recording medium including a program for executing a content determining method for an intelligent device, the method comprising: determining a source data area and, in a destination data area determining device, a destination data area having a dynamic association relationship with the source data area; and determining content in the destination data area according to content in the source data area.

**Claims**

1. A content determining method by an intelligent device, the method comprising:

   determining a source data area, wherein the source data area is located in a first application; determining a destination data area, wherein the destination data area is located in a second application; filtering content in the source data area based on user's personal information; and determining content in the destination data area for the second application according to the filtered content in the source data area,

wherein determining the source data area comprises:

   determining a selected content based on a selection made by a user on an interface of the intelligent device, generating a pop-up clipboard menu based on a touch operation performed by the user, wherein the pop-up clipboard menu comprises a source data area configuration icon to determine the source data area.

2. The method of claim 1, wherein the user's personal information includes attribute information comprising at least one of an age, a gender, an occupation and a language.

3. The method of claim 1, wherein the user's personal information includes the user's preference information, wherein the user's preference information is preconfigured by the user, or is obtained by the intelligent device according to the user's operation history.

4. The method of claim 1, wherein the source data area is determined based on at least one of:

   a data area bearing selected content, data content in an interface, application relevant information, environmental information, the user's personal information, a data type supported by the destination data area, the user's operation history, the user's instruction, or a preconfigured condition, and wherein the destination data area is determined based on at least one of: a destination area for selected content, data content in the interface, the application relevant information, the environmental information, the user's personal information, the data type supported by the source data area, the user's operation history, the user's instruction, or the preconfigured condition.

5. The method of claim 1, wherein the determining the content in the destination data area comprises: determining the content in the destination data area based on at least one of the content in the source data area or a content associated with the content in the source data area.

6. The method of claim 1, wherein, in case that there is a plurality of source data areas, the determining the content in the destination data area comprises:

   determining the content in the destination data area corresponding to a respective source data area at a same time according to contents of the plurality of source data areas; or
determining the content in the destination data area corresponding to the respective source data area in a predefined order according to the contents of the plurality of the source data areas.

7. The method of claim 1, further comprising displaying at least one of the content in the source data area or the content in the destination data area.

8. The method of claim 1, wherein the destination data area is dynamically associated with another data area,

wherein the destination data area is a source data area for the another data area, and wherein the method further comprises determining content in the another data area based on the content in the destination data area.

9. The method of claim 1, further comprising at least one of:

in case that there is a plurality of destination data areas, determining a content in the plurality of destination data areas based on a content in at least one of the plurality of destination data area; and
in case that there is a plurality of destination data areas, determining content in each of the plurality of destination data areas based on the content in the source data area.

10. The method of claim 1, further comprising:

determining another source data area associated with the source data area;
determining another destination data area associated with the destination data area according to the another source data area; and
determining a content in the another destination data area based on a content in the another source data area.

11. The method of claim 10, wherein the another source data area is determined based on at least one of:
data content in a data area, data type of the data area, application relevant information, environmental information, association information, or a user's instruction.

12. The method of claim 1, further comprising:

determining assistant information for the content in the source data area based on the destination data area; and
displaying the assistant information on an interface of the content in the source data area.

13. The method of claim 1, wherein the determining the source data area comprises:
determining the source data area from multimedia information collected in real time by an information collecting apparatus, wherein the determination of the source data area is determined by an automatic detecting manner or a manual configuration manner.

14. A content determining apparatus for an intelligent device, the intelligent device comprising:
at least one process module configured to:

determine a source data area, wherein the source data area is located in a first application,
determine a destination data area, wherein the destination data area is located in a second application,
filtering content in the source data based on user's personal information, and
determine content in the destination data area for the second application according to the filtered content in the source data area,
wherein the at least one process module is further configured to:

determine a selected content based on a selection made by a user on an interface of the intelligent device,
generate a pop-up clipboard menu based on a touch operation performed by the user, wherein the pop-up clipboard menu comprises a source data area configuration icon to determine the source data area.

15. A non-transitory computer-readable recording medium including a program for executing a content determining method for an intelligent device, the method comprising:

determining a source data area, wherein the source data area is located in a first application;
determining a destination data area, wherein the destination data area is located in a second application;
filtering content in the source data area based on user's personal information; and
determining content in the destination data area for the second application according to the filtered content in the source data area
wherein determining the source data area comprises:

determining a selected content based on a selection made by a user on an interface of the intelligent device,
generating a pop-up clipboard menu based on a touch operation performed by the user, wherein the pop-up clipboard menu comprises a source data area configuration icon
to determine the source data area.

# FIG. 1

Determine a source data area and a destination data area having a dynamic association relationship with the source data area  101

Determine content of the destination data area based on content of the source data area  102

# FIG. 2

Determine a source data area from multimedia information collected in real time by a multimedia collecting apparatus, and determine a destination data area having an association relationship with the source data area — 201

Determine content of the destination data area based on content of the source data area — 202

# FIG. 3A

Determine a source data area in the intelligent device, wherein the source data area has a dynamic association relationship with a destination data area in another intelligent device — 301

Transmit the content in the source data area to said another intelligent device, as such said another intelligent device determines the content of the destination data area according to the content of the source data area — 302

FIG. 3B

Determine a destination data area in the intelligent device, wherein the destination data area has a dynamic association relationship with a source data area in another intelligent device — 310

Receive content of the source data area transmitted by said another intelligent device — 311

Determine the content of the destination data area based on the content of the source data area — 312

# FIG. 4A

Determine sharing information to be shared with
another intelligent device, wherein the sharing
information includes an association relationship
between a source data area and a destination data area
401

Transmit the sharing information to said another
intelligent device
402

# FIG. 4B

Receive sharing information transmitted by another intelligent device, wherein the sharing information includes an association relationship between a source data area and a destination data area

410

Establish an association relationship between the source data area and the destination data area based on the received sharing information

411

Determine content of the destination data area based on the content of the source data area

412

# FIG. 5A

https://link3

Price: 26.00

Select Size ▼  Select Color ▼

Add to Cart

# FIG. 5B

# FIG. 5C

Katherine

I need a new shirt

Give me some advice

OK, show me
what you got

③

Send

FIG. 5D

EP 4 109 376 A1

# FIG. 6

FIG. 7A

((o)) **Wifi available**

< https://link3

**Clipboard**

URL ☑

Image ☑

Text ☐

| Confirm |

Select Size ▼   Select Color ▼

**Add to Cart** 🛒

< Katherine

Give me some advice

OK, show me what you got

https://link1

Send

EP 4 109 376 A1

FIG. 7B

# FIG. 8

**Katherine**

I need a new shirt

Give me some advice

OK, show me what you got

Send

---

**Katherine**

Clipboard

Accept without confirming ○

Confirm before sending ●

Confirm after receiving ○

Confirm

# FIG. 9

FIG. 10

EP 4 109 376 A1

Katherine

< https://link2

OK, show me
what you got

https://link1

https://link2

Send

★ ★ ★ ★

Price: 26.00

Katherine

< https://link3

what you got

https://link1

https://link2

https://link3

Send

★ ★ ★ ★ ☆

Price: 24.00

FIG. 11A

# FIG. 11B

FIG. 11C

FIG. 11D

FIG. 11E

# FIG. 12

Type in 29 . . . .

Line 29 in camera is highlighted

FIG. 13

EP 4 109 376 A1

FIG. 14

EP 4 109 376 A1

# FIG. 15A

FIG. 15B

FIG. 16

# FIG. 17A

**camera**

Hi, everyone, we shall arrive at airport 9:00 a.m., please don't forget your passport. If you have any

SEND

**Clipboard**

X Subject:

Hi, everyone, we shall arrive at airport 9:00 a.m., please don't forget your passport. If you

SEND

FIG. 17B

FIG. 18

# FIG. 19A

FIG. 19B

‹ shirt  🔍  ⑧    ‹ shirt  🔍

**Style :** | leisure  x |

**Brand :** AAA  BBB
CCC

**Price :**

**From :** ☐ **To :** ☐

**filtered by**

| Style : leisure  x |

| Brand | ▼ |  | Add |

**AAA BBB CCC**

FIG. 19C

EP 4 109 376 A1

# FIG. 20A

Camera | < Fuji apple  Q

filtered by

Price ▼

From : ☐  To : ☐

origin ▼

红富士  4.99 500g

FIG. 20B

## FIG. 20C

FIG. 20D

FIG. 21

FIG. 22

FIG. 23

FIG. 24

FIG. 25

# FIG. 26

Clipboard

Select data source

| From My Phone | Local |

Tunnel 1

# FIG. 27A

# FIG. 27B

FIG. 27C

FIG. 28

280

281

282

| Data area determining module | Content determining module |

FIG. 29

290

291

292

| Multimedia information obtaining module | Content determining module |

FIG. 30

300

303

304

Source data area
determining module

Transmitting
module

# FIG. 31

314

315

316

| Destination data area determining module | Receiving module |

317

| Content determining module |

FIG. 32

# FIG. 33

330

333

Content
determining module

332

Association
establishing module

331

Receiving module

Europäisches
Patentamt

European
Patent Office

Office européen
des brevets

# EUROPEAN SEARCH REPORT

**Application Number**

EP 22 19 0741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "What is Excel Formulas?", MSOFFICEGURU TEAM, 28 December 2015 (2015-12-28), XP055430497, Retrieved from the Internet: URL:http://www.msofficeguru.info/how-to-calculate-with-excel-formulas/ [retrieved on 2017-11-30] * the whole document * | 1-15 | INV. G06Q30/02 H04M1/725 |
| A | KR 2015 0083743 A (LG ELECTRONICS INC [KR]) 20 July 2015 (2015-07-20) * the whole document * | 1-15 | |
| A | US 2014/006967 A1 (ARUMUGAM SURESH [US] ET AL) 2 January 2014 (2014-01-02) * the whole document * | 1-15 | |
| A | KR 2014 0062392 A (SK PLANET CO LTD [KR]) 23 May 2014 (2014-05-23) * the whole document * | 1-15 | |
| A | US 2015/227736 A1 (GUO HONGWEI [CN] ET AL) 13 August 2015 (2015-08-13) * the whole document * | 1-15 | TECHNICAL FIELDS SEARCHED (IPC) G06Q |
| X | US 2013/290889 A1 (BAO SHENG HUA [CN] ET AL) 31 October 2013 (2013-10-31) * the whole document * | 1-15 | |
| A | EP 1 906 307 A1 (ACCENTURE GLOBAL SERVICES GMBH [CH]) 2 April 2008 (2008-04-02) * the whole document * | 1-15 | |

The present search report has been drawn up for all claims

| Place of search | Date of completion of the search | Examiner |
|---|---|---|
| The Hague | 21 November 2022 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 0741

21-11-2022

| Patent document cited in search report | | Publication date | Patent family member(s) | | Publication date |
|---|---|---|---|---|---|
| KR 20150083743 | A | 20-07-2015 | NONE | | |
| US 2014006967 | A1 | 02-01-2014 | NONE | | |
| KR 20140062392 | A | 23-05-2014 | NONE | | |
| US 2015227736 | A1 | 13-08-2015 | CN | 104836715 A | 12-08-2015 |
| | | | US | 2015227736 A1 | 13-08-2015 |
| US 2013290889 | A1 | 31-10-2013 | CN | 103377180 A | 30-10-2013 |
| | | | DE | 112013002255 T5 | 19-03-2015 |
| | | | GB | 2516592 A | 28-01-2015 |
| | | | US | 2013290889 A1 | 31-10-2013 |
| | | | WO | 2013159649 A1 | 31-10-2013 |
| EP 1906307 | A1 | 02-04-2008 | CA | 2602650 A1 | 29-03-2008 |
| | | | CN | 101226486 A | 23-07-2008 |
| | | | EP | 1906307 A1 | 02-04-2008 |
| | | | US | 2008082932 A1 | 03-04-2008 |